(19) Europäisches Patentamt
European Patent Office
Office européen des brevets

(11) **EP 1 811 441 A1**

(12) **EUROPEAN PATENT APPLICATION**

(43) Date of publication:
**25.07.2007 Bulletin 2007/30**

(51) Int Cl.:
***G06Q 10/00*** *(2006.01)*

(21) Application number: **06026950.3**

(22) Date of filing: **27.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **30.12.2005 US 323071**

(71) Applicant: **SAP AG**
**69190 Walldorf (DE)**

(72) Inventors:
• **Agassi, Shai**
**Los Gatos, California, USA 95032 (US)**

• **Hershkovitz, Barak**
**Even Yehuda 40500 (IL)**
• **Shamia, Gadi**
**Los Altos CA 94024 (US)**
• **Ziv, Udi**
**Raanana 43720 (IL)**
• **Elad, Rafi**
**Hertzliya 46364 (IL)**
• **Keren, Ido**
**Hod Hasharon 45207 (IL)**

(74) Representative: **Müller-Boré & Partner**
**Patentanwälte**
**Grafinger Strasse 2**
**81671 München (DE)**

(54) **Method and system for providing context based content for computer applications**

(57)    Summarizing, the present invention relates to a computerized method for dynamically presenting elements based on business context, comprising:

receiving (1306) a request for data (150) from a user (108);

identifying (1308) a business context (145) of the user (108);

generating (1326) a plurality of data objects based on data elements (116) retrieved (1324) in response to the request (150) from the user (108), each data object comprising at least the respective data element and a class of the particular data element (116);

presenting (1340) at least a portion of the plurality of data objects (155), with at least a portion of each data object (155) being visible; and

presenting (1342) a first presentation element (140), with the first presentation element (140) selected based on at least a first of the plurality of data objects (155) and the identified business context,

a computer program product and a computer system.

FIG. 13

## Description

The present invention relates to a method for dynamically presenting elements based on business context, a computer program product and a computer system.

In computer and data processing systems, user interaction is typically provided using a video display, a keyboard, and a mouse. The display is often presented through a graphical user interface (GUI). Such GUIs may provide the front-end for modules, applications, services, databases, or other local or remote processes. For example, the GUI may present data retrieved from a database in a user friendly form. In another example, the GUI may provide a front-end for an application with embedded customer relationship management (CRM), finance, and manufacturing capabilities. In such a case, this GUI may then provide a unified view of operations across CRM, manufacturing, and finance sub-systems or sub-modules. The user may through the GUI perform CRM, finance, manufacturing and other business processes with the application.

It is an object of the present invention to provide a technical tool for an improved data transfer over a network, in particular for automatically specifying the data to be exchanged, thereby improving the network transfer.

This object is solved by the features of the independent claims. Preferred embodiments of the invention are subject to the dependent claims.

Method according to an aspect of the invention

An aspect of the present invention relates to a computerized method for dynamically presenting elements based on business context, comprising:

receiving a request for data from a user;
identifying a business context of the user;
generating a plurality of data objects based on data elements retrieved in response to the request from the user, each data object comprising at least the respective data element and a class of the particular data element;
presenting at least a portion of the plurality of data objects, with at least a portion of each data object being visible; and
presenting a first presentation element, with the first presentation element selected based on at least a first of the plurality of data objects and the identified business context.

Following that, advantageously, according to the present invention, there is provided an improved method for provision of data over a network. In particular, the method is carried out within an existing system management environment, preferably running on a computer/ network system of a business. The computer system may be or include an existing, running computer system. The system may be a custom system.

Hence, the subject-matter of the present invention allows, in a more efficient manner to exchange data between different entities, such as different computers, workstations, personal computers, etc. Further to that, the present invention allows, in a more efficient manner, the visualization, i.e. the display of data on e.g. a remote computer, such as a client computer, a client terminal, etc. Therefore, the method according to the present invention, among other things, aims at providing a method, which may serve, assist or replace human activities of different kinds, such as selection of data and provision of data and particularly allows a more efficient way of display of data.

Further to that, even more advantageously, the method according to the present invention allows a user to perform his object in a more efficient manner, since the user is preferably automatically provided with data. In particular, the provided data is pre-selected preferably according to the business context, even more particular according to attributes/attribute data of the user. Thereby, the selection data provided for the user is decreased which means that the selection process is more efficient. Accordingly, e.g. the Graphical User Interface (GUI) preferably is improved by displaying data relevant for the user. In particular, preferably unnecessary data is not displayed, thus keeping the GUI as simple as possible. Thereby, the visual presentation and design of the GUI is improved. Also the data can be appreciated by the user much better, since preferably only essential data is displayed. Thereby, it is easier for the user to view the data.

Preferred embodiments of the method

Preferably, the business context of the user is determined by identifying attribute data, wherein the attribute data comprises characteristic information data from a client and/or said request and/or from information gathered during the authorization process.

Further preferably, a user context data is identified and/or generated from said business context.

Said user context data is also referred to as user context profile.

Most preferably, the method is carried out within a common application, in particular within a common standard system management environment.

The standard system management environment and/or application may be a specific system application that is or can be installed on computing devices of any type of business and/or of one or more users. Moreover, the standard system environment can be installed on computing devices, such as personal computers, workstations, mobile devices, etc. of and/or included in a production facility and/or of a pharmaceutical company. The specific system application(s) according to the computerized method preferably is included and/or embedded comprised etc. in said standard system environment. Said standard system environment particularly is based on or comprises at least partly system application such as SAP R/3, and/or mySAP, such as mySAP ERP, mySAP business suite, etc. or modifications thereof. A standard system management environment may also be referred to as enterprise resource planning (application/ environment).

Preferably, the user context data is determined dynamically, based on run-time algorithms and data, in particular attribute data.

Further preferably, the user context data is determined with little, preferably without referencing or substantially processing static structures.

More preferably, request is parsed into a data query, preferably a SQL query, a Java object

According to a preferred embodiment, said requested data elements are retrieved from one or more locations, in particular a local portion of memory and/or a distributed portion of repository.

According to a further preferred embodiment, multiple queries are executed across said locations and wherein the results are bundled upon receipt.

Preferably, an updated application interface is presented to said user.

Further preferably, at least a first data element is selected from said plurality of data elements and wherein a class and/or a category and/or other metadata of said selected data element are identified.

Most preferably, said category is a data table storing and/or referencing said particular element and/or an algorithmic description of the particular data element and/or a descriptor and/or metadata

According to a preferred embodiment, a first user context element and/or data is identified from said identified user context.

According to a further preferred embodiment, said identified data, is used to determine if there are one or more presentation elements associated with the particular combination of said data element in the user context element

According to another preferred embodiment, a data object is generated and/or instantiated based on said particular data element.

Preferably, data object comprises any bundling, encapsulation, instantiation, interface, and/or other association of said particular data element.

Further preferably, data object comprises a Java object that includes the transaction data stored or referenced in data element and/or the particular table and/or file that stores the element and/or a category.

Most preferably, there is determined if there are more user context elements within the identified user context and, if there are, there a next user context element is identified and additional presentation elements that are associated with this particular data element are determined.

According to a preferred embodiment, once there are no more user context elements to process for said particular data element, there is determined if there more data elements and if there are more data elements, then application preferably selects the next data element one or more combinations of said new data element and said identified user context are identified and/or processed.

According to a further preferred embodiment, once said various combinations of data elements and the particular user context have been identified and processed said retrieved presentation elements are ranked and/or sorted and a least a subset of said retrieved presentation elements are selected based on the rank and/or priority and at least a subset of said generated data objects are presented through application interface.

According to another preferred embodiment, said selected subset of presentation elements are presented via said application interface.

Preferably, providing sponsored content for use with a computer application, comprises:

> obtaining a business context for a user of a computer application; and
> using the business context to provide sponsored content for use with the computer application.

Further preferably, the business context comprises a current usage context in a business application.

Business application is generally any software or computer-implemented program that assists a business in their business activities, e.g. for controlling and/or managing functions or workflows, particularly in view of increasing the business productivity and/or measure their productivity. The term business application covers a large variation of uses within the business environment. For instance, in a small business market context typical business applications comprise home accounting software, and office suites. Accounting software particularly is computer software that records and processes accounting transactions within functional modules such as accounts payable, accounts receivable, payroll and trial balance. It functions as an accounting information system. It may be developed in-house by the company or organization using it, may be purchased from a third party, or may be a combination of a third-party application software package with local modifications. Moreover, business applications may comprise an office suite (sometimes called an office application suite or productivity suite) which particularly is a software suite intended to be used by typical clerical and/or knowledge workers. The computer-implemented components are generally distributed together, have a consistent user interface and usually can interact with each other, sometimes in ways that the operating system would not normally allow. Examples of office suites are Microsoft Office, OpenOffice.org, NeoOffice, StarOffice, WordPerfect Office. iWork, Keynote, KOffice, GNOME Office, Lotus SmartSuite, Lotus Notes SoftMaker Office, ThinkFree Office, Zoho Office Suite, Celframe Office and 602PC Suite. Moreover, e.g. in medium size companies or small and medium sized enterprises (SME) environments, business applications comprise a broader range of software or computer-implemented applications, ranging from accounting, groupware, customer relationship management, human resources software, shopping cart software, field service software, and other productivity enhancing applications. Groupware (sometimes also called collaborative software) as one example of business application particularly comprises software designed to help people involved in a common task achieve their goals. Collaborative software e.g. is the basis for computer supported cooperative work. Such software systems as mail, calendaring, synchronous conferencing or text chat, wikipedia (a type of Web site that allows the visitors themselves to easily add, remove, and otherwise edit and change some available content, sometimes without the need for registration) belong in this category. Business applications further comprise customer relationship management (CRM) applications which particularly relate to specific (computer-implemented) methods and technologies used by companies to manage their relationships with clients. Information stored on existing customers (and potential customers) is analyzed and used to this end. Automated (computerized or computer-implemented) CRM processes are often used to generate automatic personalized marketing based on the customer information (as a preferred business context data) stored in the system or retrieved accordingly. Business application may further comprise Human Resource Management Systems (HRMS, EHRMS) or applications, Human Resource Information Systems (HRIS) or applications, HR Technology or also called HR modules, which particularly shape an intersection in between human resource management (HRM) and information technology. In this respect, HRM as a discipline and in particular its basic (computer-implemented) HR activities and processes are merged with the information technology field, whereas the planning and programming of data processing systems evolved into standardised routines and packages of enterprise resource planning (ERP) software or applications, as described below. Particularly, these ERP systems have their origin on software that integrates information from different applications into one universal database, wherein financial and/or human resource modules are linked through one database, which makes this software application both rigid and flexible. Business applications further comprise shopping cart software (sometimes also called shopping trolley software or shopping basket software) which is software or computer-implemented applications used in e-commerce to assist people making purchases online. The shopping cart software allows online shopping customers to "place" items in the cart. Upon "checkout" the software calculates a total for the order including shipping and handling (i.e. postage and packing) and taxes, if applicable. These applications typically provide a means of capturing a client's information, such as credit card information, but they rely on the software module of the secure gateway provider, in conjunction with the secure payment gateway, in order to conduct secure credit card transactions online. In particular, some setup is implemented in the HTML code of the website, and the shopping cart software can be installed on the (remote) server which hosts the site, or on the secure server which accepts sensitive ordering information. E-shopping carts are usually implemented using HTTP cookies or query strings. Cart software may be generally categorized into two categories: (a) Download-and-install: this is most often associated with a one-time fee, although there are many free products available as well; (b) Hosted service: from a hosted service provider and is generally paid for on a monthly/annual basis; also known as the application service provider (ASP) software model. This model often has predefined templates that a user can choose from to customize their look and feel. Examples of hosted shopping cart providers are 3dcart, Volusion and Monstercommerce. Moreover, business applications particularly comprises enterprise level software or computer-implemented applications, such as those in the fields of enterprise resource planning, enterprise content management (ECM), business process management and product lifecycle management. These applications often come with modules that either add native functions, or incorporate the functionality of third-party software programs. Enterprise Resource Planning systems (ERPs) as particular business applications at least partly integrate data and/or processes of an organization into a unified system. A typical ERP system will use multiple components of computer software and hardware to achieve the integration. A key ingredient of most ERP systems is the use of a unified database to store data for the various system modules. The term ERP originally implied systems designed to plan the utilization of enterprise-wide resources. Although the acronym ERP originated in the manufacturing environment, the term ERP systems as intended here has much broader scope. ERP systems typically cover most or substantially all basic functions of an organization, regardless of the organization's business or charter. Business, non-profit organizations, non governmental organizations, governments, and other large entities utilize ERP systems. Additionally, it may be noted that to be considered an ERP system, a software package generally would only need to provide functionality in a single package that would normally be covered by two or more systems. Technically, a software package that provides both payroll and accounting functions (such as QuickBooks) would be considered an ERP software package. However, the term is typically reserved for larger, more broadly based applications. The introduction of an ERP system to replace two or more independent applications eliminates the need for external interfaces previously required between systems, and provides additional benefits that range from standardization and lower maintenance (one system instead of two or more) to easier and/or greater reporting capabilities (as all data is typically kept in one database). Examples of modules in an ERP (which formerly would have been stand-alone applications) include one or more of the following: Manufacturing, Supply Chain, Financials, CRM, Human Resources, and Warehouse Management. Enterprise Content Management (ECM) as a particular (computer-implemented) business application is any of the strategies and technologies employed in the information technology industry for (computerized or computer-implemented) managing the capture, storage, security, revision control, retrieval, distribution, preservation and/or destruction of documents and/or content (generally of data). ECM especially concerns content imported into or generated from within an organization in the course of its operation, and includes the control of access to this content from outside of the organization's processes. ECM systems as particular business application systems are particularly designed to manage both structured and unstructured content or data, so that an organization, such as a business or governmental agency, can more effectively meet business goals (increase profit or improve the efficient use of budgets), serve its customers (as a competitive advantage, or to improve responsiveness), and protect itself (against non-compliance, lawsuits, uncoordinated departments or turnover within the organization). Moreover, business applications may comprise (computer-implemented) Business Process Management (or BPM) which includes activities performed by businesses to improve their processes. BPM systems (automatically) monitor the execution of the business processes so that managers can (automatically) analyze, control and/or change processes in response to data, rather than just a hunch. Furthermore, business applications comprise applications for Product lifecycle management (PLM) which allow managing parts or the substantially entire lifecycle of a product particularly from its conception, through design and manufacture, to service and disposal. Particularly, PLM allow e.g. manufacturing engineering companies to develop, describe, manage and/or communicate information about their products.

Most preferably, the current usage context comprises data from a transaction screen and/or a presentation screen in the business application.

Computer program product according to an aspect of the invention

A further aspect of the present invention relates to a computer program product, in particular stored in a computer readable medium or as a signal, which, when loaded in the memory of a computer carries out the method according to the invention.

Computer system according to an aspect of the invention

Another aspect of the present invention relates to a computer system for dynamically presenting elements based on business context, comprising:

a receiving device adapted for receiving a request for data from a user;
an identification device adapted for identifying a business context of the user;
data processing device adapted for generating a plurality of data objects based on data elements retrieved in response to the request from the user, each data object comprising at least the respective data element and a class of the particular data element;
a data presenting device, such as a display, which is adapted for presenting at least a portion of the plurality of data objects, with at least a portion of each data object being visible; and wherein said data presenting device is further adapted for
presenting a first presentation element, with the first presentation element selected based on at least a first of the plurality of data objects and the identified business context.

Summarizing an aspect of the present invention can relate to a computerized method for providing sponsored content for use with a computer application, comprising:

obtaining a business context for a user of a computer application; and
using the business context to provide sponsored content for use with the computer application.

Preferably, the method further comprises presenting the sponsored content to the user in the computer application.

More preferably, the method further comprises selecting the sponsored content dynamically during use of the computer application.

Preferably, the method further comprises selecting the sponsored content based on monetization of sponsored content.

More preferably, the sponsored content comprises advertising.

Most preferably, the sponsored content comprises competitive bids.

According to a further preferred embodiment, the computer application comprises a business process application and the business context comprises a step of a business process performed using the business process application.

According to a preferred embodiment, the business context comprises a business role of the user of the computer application.

Preferably, the business context comprises a business profile of the user's business.

Further preferably, the business context comprises a business class of the user's business.

More preferably, the computer application is a business application and the business context comprises a current usage context in the business application.

Most preferably, the current usage context comprises data from at least one of transaction and presentation screens in the business application.

According to a preferred embodiment, the first business context of a first type and the method further comprise:

> obtaining a second business context for the user of the computer application, the second business context of a second type; and
> using the second business context to refine the sponsored.

According to a further preferred embodiment, the method further comprises obtaining the business context by collecting business context in a computer system in communication with the computer application.
Preferably, another aspect can relate to a computerized method for providing secondary content in a computer application, comprising:

> presenting primary content of a computer application to a user of the computer application;
> receiving secondary content based on a business context of the user; and
> presenting the secondary content with the primary content to the user of the computer application.

According to a preferred embodiment, the business context comprises at least one of a business role of the user, a business profile of the user's business, a business class of the user's business, and a step of a business process.
According to a further preferred embodiment, the secondary content comprises advertising.
Preferably, another aspect can relate to a computerized method for monetization of a computer application, comprising:

> selecting sponsored content based on business context of a user of a computer application;
> providing the sponsored content for use with the computer application; and
> compensating a provider of the computer application in connection with provisioning the sponsored content for use with the computer application.

Preferably, the sponsored content comprises advertising and the business context comprises at least one of a business role of the user, a business profile of the user's business, a business class of the user's business, and a step of a business process.
According to a preferred embodiment, the method further comprises compensating the provider of the computer application based on display of the sponsored content in the computer application.
According to a further preferred embodiment, the method further comprises compensating the provider of the computer application based on purchases in response to the sponsored content.
Preferably, another aspect can relate to a computerized method for predictive advertising, comprising:

> determining a service useful at a later step of a computer application;
> retrieving sponsored content for performing the service; and
> presenting the sponsored content for the service at the later step of the computer application.

Preferably, the sponsored content comprises advertising.
Further preferably, the computer application comprises a business process application and the step comprises part of a business process performed using the business process application.
Preferably, another aspect can relate to a computerized method for selecting sponsored content, comprising:

> storing a plurality of sponsored content items for use in connection with computer applications;
> storing for each of the sponsored content items selection information comprising at least one of a business role, a business profile, a business class, and a step of a business process; and
> selecting a sponsored content item for use with a computer application based on comparing a business context of a user of the computer application with the selection information.

According to a preferred embodiment, the sponsored content comprises advertising.
According to a further preferred embodiment, the computer application comprises a business process application.
Preferably, another aspect can relate to a computer display for a business process application, comprising:

> a first display element presenting content for a step of a business process; and
> a second display element presenting sponsored content from one or more vendors for performing the step of the business process.

Further preferably, the sponsored content comprises advertising.
Preferably, another aspect can relate to a computerized method for advertising in a business process application, comprising:

> presenting a step of a business process in a business process application; and
> exposing service providers of the service to users of the business process application by presenting advertising of the service providers in the business process application at the step of the business process.

Further preferably, the step comprises paying a bill for the service.

Preferably, another aspect can relate to a computerized method for dynamically presenting elements based on business context, comprising:

receiving a request for data from a user;
identifying a business context of the user;
generating a plurality of data objects based on data elements retrieved in response to the request from the user, each data object comprising at least the respective data element and a class of the particular data element;
presenting at least a portion of the plurality of data objects, with at least a portion of each data object being visible; and
presenting a first presentation element, with the first presentation element selected based on at least a first of the plurality of data objects and the identified business context.

Preferably, another aspect can relate to a system for utilizing dynamic business context comprising:

memory storing a plurality of data elements and presentation elements, at least a portion of the presentation elements associated with one or more service providers; and
one or more processors operable to:

automatically identify a business context of a user;
generate a plurality of data objects based on data elements retrieved from memory in response to a request from the user, each data object comprising at least the respective data element and a class of the particular data element;
present at least a portion of the plurality of data objects to the user through a graphical user interface (GUI), with at least a portion of each presented data object being visible; and
present a first of the presentation elements through the GUI, the first presentation element selected based on at least a first of the plurality of data objects and the identified business context.

Preferably, another aspect can relate to a computerized method for providing sponsored content for use with a client-side application, comprising:

communicating with a remotely-hosted computer application;
receiving sponsored content selected based on a business context for a user of a computer application; and
providing the sponsored content for use with the computer application.

Preferably, the method comprises presenting the sponsored content to the user in the computer application.

Further preferably, the computer application comprises a business process application and the business context comprises a step of a business process performed using the business process application.

Hence, preferably, methods and systems for providing context based content for computer applications are provided. A method for providing sponsored content for use with a computer application preferably includes obtaining a business context for a user of a computer application. The business context may be used to provide sponsored content for use with the computer application.

Further to that, the present invention preferably provides various embodiments of systems, methods, and software for presenting and otherwise providing context-based content for a computer application. In one embodiment, a method for providing sponsored content for use with a computer application includes obtaining a business context for a user of the computer application. The business context is used to provide sponsored content for use with the computer application. In this and other embodiments, the business context may, for example, be a business role of the user, a business profile of the user's business, a business class of the user's business, and/or a step of a business process. The sponsored content may be advertising, competitive bids from service providers and the like. In a specific embodiment, the context-based content may be display content and may be independent from the running of the computer application. In this and other embodiments, the context may be user specific context, which may also be independent of the running of the computer application.

According to another preferred aspect of the invention, a method for providing secondary content in a computer application includes presenting primary content of the computer application to a user of the computer application. Secondary content based on a business context of the user is received and presented with the primary content to the user of the computer application. The secondary content may be advertising or any other suitable content.

According to another preferred aspect of the invention, a method for monetization, or in another embodiment enhancement, of a computer application includes selecting sponsored content based on business context of a user of the computer application. The sponsored content is provided for use with the computer application. A provider of the computer application is compensated in connection with provisioning the sponsored content for use with the computer application.

According to another preferred aspect of the invention, a method for selecting sponsored content includes storing a plurality of sponsored content items for use in connection with computer applications. Each of the sponsored content items includes selection information including at least one of a business role, a business profile, a business class, and a step of a business process. A sponsored content item is selected for use with a computer application based on comparing a business context of a user of the computer application with the selection information.

According to still another preferred aspect of the invention, a method for dynamically presenting elements based on business context comprises receiving a request for data from a user and automatically identifying the business context of the user. A plurality of data objects may be generated based on data elements retrieved in response to the request from the user, with each data object comprising at least the respective data element and a class of the particular data element. At least a portion of the plurality of data objects may be presented, with at least a portion of each presented data object being visible. A first presentation element may also presented, with the first presentation element selected based on at least a first of the plurality of data objects and the identified business context.

Each of the foregoing - as well as other disclosed - example methods may be computer implementable. Moreover some or all of these preferred aspects may be further included in respective systems and software for presenting and otherwise providing context-based content for a computer application. For example, a system for providing sponsored content for use with a computer application may obtain a business context for a user of the computer application. The business context is then used by the system to provide sponsored content for use with the computer application. According to another embodiment, a system for utilizing dynamic business context may include memory storing a plurality of data elements and presentation elements, with at least a portion of the presentation elements associated with one or more service providers. The system may further include one or more processors operable to automatically identify a business context of a user and to generate a plurality of data objects based on data elements retrieved from memory in response to a request from the user. Each data object preferably comprises at least the respective data element and a class of the particular data element. At least a portion of the plurality of data objects are presented to the user through a graphical user interface (GUI), with at least a portion of each presented data object being visible. The system then presents a first of the presentation elements through the GUI, with the first presentation element selected based on at least a first of the plurality of data objects and the identified business context.

In specific embodiments, computerized methods and systems may provide display or other context-based content for use with a computer application where the display content is independent from the running computer application. The methods and/or systems may obtain a user-specific context for a user of a computer application. The user specific context may be independent from running the computer application. The user specific context may be used to provide context-based content for use with the computer application. In other specific embodiments, computerized methods and systems for providing secondary content in a computer application may present primary content of a computer application to a user of the computer application. Secondary content may be received based on a user-specific context. The secondary content and user specific context may be independent of the running of the computer application. The secondary content may be presented with the primary content to the user of the computer application. In still other specific embodiments, computerized methods and systems for providing an enhanced computer application includes selecting display content based on user-specific context of a user of a computer application. The display content may be provided for use with the computer application. A provider of the computer application may be credited through data exchange or otherwise in connection with provisioning the display content for use with the computer application.

The method and system preferably also include client-side methods and systems for providing the described features, elements and functionality in connection with a remotely-hosted or other server-side application. For this aspect, the client-side methods and systems, such as a GUI or other client display, preferably may receive the indicated content or other data items which may be selected or provided based on context or as otherwise indicated and may display, present or otherwise use the content and data items. The preceding description of the aspects of the invention is not limited to the respective aspects. Rather, the description of the respective aspects can be applied for the remaining aspects of the invention. In particular, the description regarding to the methods can be applied for the computer system and the computer program product and the respective preferred embodiments, accordingly.

Description of the Figures

Preferred embodiments of the present invention will be described by example in the following enclosed figures. Specific features described in the figures are examples that may be arbitrarily combined with each other, in order to create further embodiments.

In particular, features, objects, and advantages of the various embodiments will be apparent from the description and drawings.

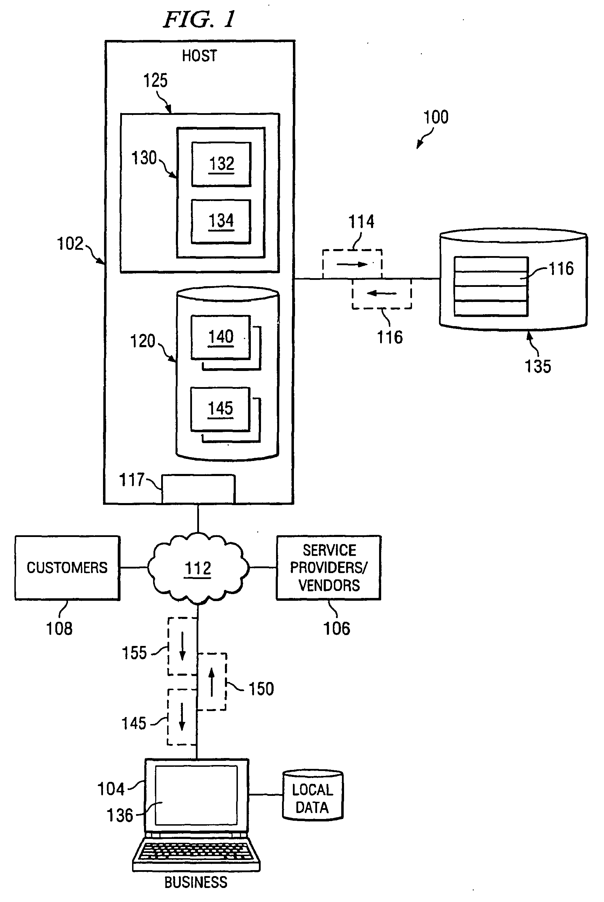

FIGURE 1    illustrates an example system for processing user context in accordance with one embodiment of the present disclosure;

| | |
|---|---|
| FIGURE 2 | illustrates an example hosting infrastructure implementing various processes and modules in accordance with one embodiment of the system of FIGURE 1; |
| FIGURE 3 | illustrates an example application implementing certain techniques and components in accordance with one embodiment of the system of FIGURE 2; |
| FIGURE 4 | illustrates a flowchart illustrating an example method for processing user registration into the system of FIGURE 1; |
| FIGURES 5A-C | illustrate example graphical user interfaces (GUIs) for user registration as implemented by the application described in FIGURE 2; |
| FIGURE 6 | illustrates a flowchart illustrating an example method for processing the user context as implemented by the application described in FIGURE 2; |
| FIGURES 7A-D | illustrate example GUIs for processing the user context as implemented by the application described in FIGURE 2; |
| FIGURE 8 | illustrates a flowchart illustrating an example method for providing dynamic contact pages based on user context; |
| FIGURE 9 | illustrates a flowchart illustrating an example method involving the content center described in FIGURE 2; |
| FIGURE 10 | illustrates a flowchart illustrating an example method for providing target advertising based on user context; |
| FIGURE 11 | illustrates a flowchart illustrating an example method for providing target advertising based on previous advertising; |
| FIGURE 12 | illustrates a flowchart illustrating an example method for managing feedback of service providers or users; |
| FIGURE 13 | illustrates an example method for dynamically presenting elements based on user context, potentially implemented by components similar to those described in FIGURES 1, 2, or 3 in accordance with the present disclosure; |
| FIGURE 14 | illustrates an exemplary view of a preferred method; |
| FIGURE 15 | provides a detailed view of a section of figure 14; |
| FIGURE 16 | provides a detailed view of a section of figure 14; |
| FIGURE 17 | provides an overview of a system; |
| FIGURE 18 | provides a schematic overview over a conventional computer system; and |
| FIGURE 19 | provides a graphical view of example information used to create a user context data structure. |

**FIGURE 1** illustrates an example system 100 for presenting or otherwise providing context based content for users of a computer application. "Business context" and "user context" are typically used interchangeably herein to describe some information collected, known, stored, e.g. in a database, determined, received, e.g. through a network, such as a WAN, a LAN, in particular through the internet or an intranet, etc., or otherwise identified by some component of system 100 to be associated with a user's role in a business, the user's business, a business application or process, and/or business activity of the user, business, or process or data involved therein. The above exemplarily mentioned database can be or consist of a complex database structure. In particular such a database/database structure can include one or more data storage devices, such as a harddrive. The database preferably also includes some infrastructure for addressing, storing, receiving, etc. of data. In particular, the database can include various data storage devices inerconnected to/with each other. The database further preferably includes centralized data storage elements as well as decentralized data storage elements, which preferably are connected to allow data exchange with each other.

Generally, system 100 uses this business or user context, as a preferred kind of data, in particular transfer data, which can be text data, or data in any suitable format, in particular adapted for an easy treatment in or with a database, to host, execute, reference, or otherwise implement a contextual solution 130 to enable vendors or other service providers 106 to provide products and other services to businesses 104, or their individual users, as well as other companies in the network. Hence, advantageously, an improved data exchange or data transfer between different entities, such as vendors or other service providers 106, businesses 104, or their individual users, as well as other companies, is provided. Most advantageously, such a data transfer allows a provision of information from one entity A to another entity B, without demanding or using resources of the entity B, even, without the necessity of the entity B to request the respective information.

The contextual solution preferably is any kind of data, such as text data or data suitable for an easy treatment in a database. The contextual solution preferably is Metadata. Metadata can be any kind of data, in particular of special interest in various fields of computer science. Such fields can be, e.g. information retrieval and securing, back up of data, etc. Further, such fields can relate to the semantic web. As an example, in library science metadata can be used for cataloging. Hence, metadata can be any kind of data used to further describe, define, etc. any kind of data. In other words, metadata can be any data, preferably providing information about some other data, to which it refers to or relates to or points to, etc.

Referring to illustrated FIGURE 1, the contextual solution 102 according to a preferred embodiment of the present invention is a hosted solution on a remote server providing various business processes and functionality to business 104. The hosted solution can be a program, an application, a macro, etc. Accordingly, system 100 may implement a suite of tightly integrated products that provide a contextual solution to offer advertisers and other sponsored content providers a wide range of product offerings or other secondary content, from personalized advertising through contextual text ads to creative advertisements based on the business context or other primary content. In other words, the system 100 preferably is adapted to allow a advertisers and/or sponsored content providers data provision over the network, wherein the data provision preferably can be adapted according to the needs of the advertisers and/or sponsors. Thereby, system 100 preferably comprises a database and a network structure or system 100 is part of or integrated in a network structure. For example, business 104 may create an invoice, as preferred data to be exchanged/provided based on a purchase by a customer 108.

In this example, system 100 may provide targeted advertising to assist the business in selecting a shipping company. If the example customer 108 doesn't pay the business, then system 100 may provide secondary content, as preferred exchange data, which can be any kind of computer data, in particular, a conventional text file, a pdf file, an xml file or any other suitable file which preferably is suitable to be provided and/or handled by a predeterminable database. The secondary content may be provided to the business user, which preferably is any kind of user which is or can be installed, embedded, included, etc. in the preferred (network) system, in particular involving debt collection services or specialty finance companies that provide working capital financing. In another example, the customer 108 of business 104 may request a quote or proposal. In other words, the customer 108 preferably contacts a database for a quote or a proposal. System 100 may provide business 104 with secondary content, as one or more preferred data objects and/or as one or more preferred data elements and/or classes of particular data elements from a database, in particular a complex database structure (see above). Said secondary content may be aimed at increasing the sales books/courses and tips. If the business user selects items in response to this quote request, then system 100 may automatically compare prices, check price and terms of item by other merchants to give a better offer, and/or offer accessories and alternative items. Thereby, the system preferably parses a database, wherein the database can be a database embedded into the system. The system may alternatively/additionally parse an external database or more external databases and/or websites through a network connection, in particular through the internet. To enhance this secondary content, system 100 may also monitor how many people click on each of the ads and note what each user does at the particular website, user's pattern of behavior thereby potentially refining context and the relevance (and placement) of each of the ads. In other words, the system may be adapted to monitor the network transfer provided through one or more graphical user interfaces, in particular using a conventional or a custom web browser. Thereby, the system may monitor the network transfer in detail or simply monitor specific elements of the network transfer. Moreover, system 100 may increase its ability to place relevant ads in front of the user using behavioral targeting. In other words, the system 100 may use and evaluate the data generated by monitoring the data transfer in order to provide the user with specific data, such as, e.g. data objects and/or data elements and/or classes of particular data elements. As an example, such behavioral processing may track what a user clicks on and looks at across a range of sites over the course of weeks and months, and build a detailed profile of that user's interests, purchases, and preferences. In particular, database entries, such as data elements and/or classes of data elements may be stored in the database. Said entries preferably may be updated on a regular basis and/or whenever a respective user enters the system and/or undertakes specific actions in the system. The entry of the user into the system may be done by login into the system, preferably using a specific application or a standard browser. The login can be carried out through a specific graphical user interface (GUI).

System 100 is typically a distributed client/server system that spans one or more networks such as 112. As described above, rather being delivered as packaged software, system 100 may represent a hosted solution, often for an enterprise or other small business, that may scale cost-effectively and help drive faster adoption. In this case, portions of the hosted solution may be developed by a first entity, while other components are developed by a second entity. These entities may participate in any suitable form of revenue or cost sharing as appropriate. Moreover, the processes or activities of the hosted solution may be distribution amongst these entities and their respective components. For example, system 100 may implement an advertising-supported business model for software distribution. Such a model may provide a platform that leverages web-technologies to enable delivery of products and services to users. Accordingly, it may enable third-party service providers to offer their services at the business object level through a seamless user-experience. Hence, preferably, the there may be provided a data exchange between the different entities of the system and/or external entities connecting and/or connected to the system. In another example, system 100 may implement a component-based architecture and strong platform helps engage service providers to develop targeted solutions for sub-verticals or others types of markets. This implementation may emphasize features that helps benefit businesses that sell via online stores, thereby leveraging strategic relationships to bring the product to market. In other words, through monitoring the network transfer and/or network action, in particular the actions of a user, such as one or more requests from a user of the network, specific data may be generated and/or stored and, if necessary, said data can be provided to a further user, such as a dealer or provider of a certain service. In such embodiments, data may be communicated or stored in an encrypted format. Therefore any conventionally known encryption method may be used, such as, for example, the standard TNG encryption algorithm. In particular, the TNG encryption can be part of a Samba TNG service. Additionally or alternatively, any other conventional encryption method may be used, such as an RSA encryption etc. Also, as specific application may be used, such as TAR, ZIP; PGP, GPG, etc. This encrypted communication may be between the user and the host or amongst various components of the host. Further, system 100 may store data (user, transaction, service provider, and such) at a relatively central location (over WAN), while concurrently maintain local data at the user's site for redundancy and to allow processing during downtime. But system 100 may be in a dedicated enterprise environment - across a local area network (over LAN) or subnet - or any other suitable environment without departing from the scope of this disclosure.

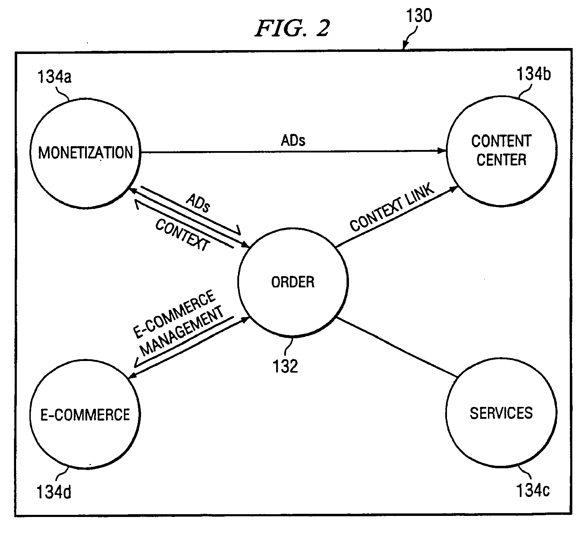

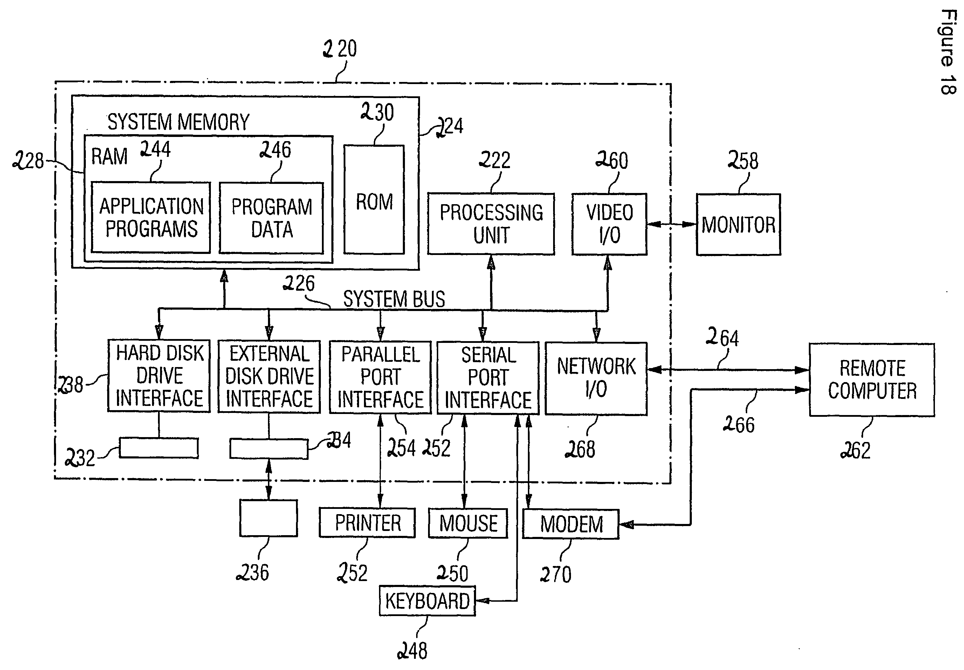

Turning to the illustrated embodiment, system 100 includes or is communicably coupled with server 102, one or more clients 104, one or more service providers or vendors 106, one or more customers 108, at least some of which communicating across network 112. Server 102 comprises an electronic computing device operable to receive, transmit, process and store data associated with system 100. Generally, **FIGURE 2** provides merely one example of computers that may be used with the disclosure. Such a conventional computer or system is also shown in figure 18 below. Each computer is generally intended to encompass any suitable processing device. For example, although FIGURE 1 illustrates one server 102 that may be used with the disclosure, system 100 can be implemented using computers other than servers, as well as a server pool. Indeed, server 102 may be any computer or processing device such as, for example, a blade server, general-purpose personal computer (PC), Macintosh, workstation, Unix-based computer, or any other suitable device. In other words, the present disclosure contemplates computers other than general purpose computers as well as computers without conventional operating systems. Server 102 may be adapted to execute any operating system including Linux, UNIX, Windows Server, or any other suitable operating system. According to one embodiment, server 102 may also include or be communicably coupled with a web server and/or a mail server. As illustrated, server 102 is communicably coupled with a remote repository 135 over a portion of network 112. Repository 135 is any intra-enterprise, inter-enterprise, regional, nationwide, or substantially national electronic storage facility, data processing center, or archive that allows for one or a plurality of clients 104 (as well as servers 102) to dynamically store and retrieve data elements 116, which may include any business, enterprise, application or other transaction data and/or metadata. In other words, repository 135 may be an implementation of a database. Each data element 116 includes some form of transaction data and, perhaps, other related data such as foreign keys. Repository 135 may be a central database communicably coupled with one or more servers 102 and clients 104 via a virtual private network (VPN), SSH (Secure Shell) tunnel, or other secure network connection. Repository 135 may be physically or logically located at any appropriate location including in one of the example enterprises or off-shore, so long as it remains operable to store information associated with system 100 and communicate such data to at least a subset of plurality of clients 104 (perhaps via server 102). For example, repository 135 may comprise a data store or warehouse substantially local to application 130.

As a possible supplement to or as a portion of repository 135, illustrated server 102 includes local memory 120. Memory 120 may include any memory or database module and may take the form of volatile or nonvolatile memory including, without limitation, magnetic media, optical media, random access memory (RAM), read-only memory (ROM), removable media, or any other suitable local or remote memory component. Illustrated memory 120 includes presentation elements 140 and user context profiles 145. But memory 120 may also include any other appropriate data such as VPN applications or services, firewall policies, a security or access log, print or other reporting files, HTML files or templates, data classes or object interfaces, child software applications or sub-systems, and others which may be used for the above described data transfer and/or exchange.

Illustrated presentation elements 140 preferably include any parameters, pointers, variables, algorithms, instructions, rules, files, links, or other data for easily providing secondary content for any combination of user context and application data at any appropriate level of granularity. It will be understood that while user context may be described in terms of "combinations," such various user context data may be stored or processed using at least one data structure, object, record or file. Such presentation elements 140 may include (among other things) primary content, secondary content, and/or sponsored content, wherein the primary content, secondary content, and/or sponsored content can consist of or include different data types and/or data files. For example, each presentation element 140 may be a text element, a graphics element, a multimedia element, a network link to a second application, a network link to a remote module, an executable, or any other graphical or display element. In a more specific example, presentation element 140 may include or reference a publicly-available web page (or portion thereof), an internal e-mail, the user's personal contact information, weather information, a profit and loss report of a company, an OLAP (on-line analytical processing) report, portion of a sales order, as well as many others. In some embodiments, presentation elements 140 (or pointers thereto) may be stored in one or more tables, such as look-up tables, e.g. in a relational database described in terms of SQL statements or scripts, as a preferred example. In another embodiment, presentation elements 140 may be formatted, stored, or defined as various data structures in text files, extensible Markup Language (XML) documents, Virtual Storage Access Method (VSAM) files, flat files, Btrieve files, comma-separated-value (CSV) files, internal variables, and/or one or more libraries and so on. For example, a particular presentation element record may merely be a pointer to a third party advertisement stored remotely. In another example, a particular presentation element may be an internally stored advertisement for a tightly coupled service. In short, presentation elements 140 may comprise one table or file or a plurality of tables or files stored on one computer or across a plurality of computers in any appropriate format. Indeed, some or all of presentation elements 140 may be local or remote without departing from the scope of this disclosure and store any type of appropriate data.

Illustrated memory 120 further includes user context profiles 145 which can include or consist of one or more of text, pdf, xml, doc, rtf, etc data or files. While not necessary, user context profile 145 may aid system 100 in identifying or determining the user context of the particular user. More specifically, user context profile 145 may include rules, algorithms, tables, or other instructions to identify certain user context elements - or individual data or other information helping define or describe the user's context - such as a logical address such as an IP address or subnet, a physical location of the user, a user role, a department associated with the user, a particular company or enterprise, an industry associated with such a company or enterprise, a user identifier, a project, historical or current user actions, user preferences, or any other suitable contextual user element or contextual business element. In other words the user context profile may be any form of data, file, database element and/or entry, necessary to provide the respective information needed. For example, the user context profile 145 may help application 130 determine the role of the user based on the user's login ID. It should be understood that this disclosure contemplates the term "based on" to include "based, at least in part, on." In another example, the user context profile may help application 130 determine the industry or department of the particular user based on the subnet identifier of client 104, which may identify the enterprise of logical network including the user. In a further example, the user context profile 145 may provide a list of users and the expected or preferred types of presentation elements 140 as determined by the user context. Said provision preferably is carried out by selecting data for each user and/or the presentation elements 140 from a database. If necessary, the presentation elements 140 may be adapted to be properly displayed for the user, preferably on a computer, terminal etc. of the user. In other words, the presentation elements 140 may be stored in a generic format and, according to the specific needs of the computer, terminal, operating system, GUI application etc. of the user be manipulated and/or formatted, such that a proper presentation to the user can be provided. In particular, the presentation elements 140 may be stored in a format, not readable/understandable by the user, but may be formatted, such that the user is able to read/understand the presentation elements 140. Such a list may be customized by a network, database, or system administrator, as well as by the particular verified user. In this example, the user may login through a portal to customize his list of context elements to ensure that appropriate or more useful presentation elements 140 are displayed on his GUI 136 when he requests data. Moreover, server 102 may automatically determine the user's contextual information and store such information in a profile 145 for subsequent use. As with presentation elements 140, user context profiles 145 may be stored in any suitable format, such as an XML file or a SQL table, in one or more appropriate local or remote locations. For example, server 102 may store a plurality of records that are keyed off of the particular business 104, the respective user, and the context type or combination identifier. These example records would then include other information such as the business or user context combination, foreign keys, or other usable data.

Server 102 also includes processor 125. Processor 125 executes instructions and manipulates data to perform the operations of server 102 such as, for example, a central processing unit (CPU), a blade, an application specific integrated circuit (ASIC), or a field-programmable gate array (FPGA). Although FIGURE 1 illustrates a single processor 125 in server 102, multiple processors 125 may be used according to particular needs and reference to processor 125 is meant to include multiple processors 125 where applicable. In the illustrated preferred embodiment, processor 125 executes application 130.

At a high level, the application is operable to receive and/or process requests 150 from users and present at least a subset of the results to the particular user via an interface. Hence, a transfer of at least a subset of the relevant data is provided. More specifically, application 130 preferably is any application, program, module, process, or other software that includes some context component 132 that is operable to identify, preferably by monitoring the network traffic and/or specific actions of the user, the context of the user and that presents presentation elements 140 along with other data objects 155 through interface 136. In certain cases, system 100 may implement a composite application 130, as described above in FIGURE 2. For example, application 130 may comprise a hosted business application 132 that is communicably coupled with a variety of other modules 134, each typically operable to provide some information, service, product, or reference to secondary content or service provider 106. In this manner, application 130 may offer advertisers a wide range of product offerings from personalized ads (text ads and banner ads) to contextual ads based on user and business context. In other words, application 130 may be adapted to communicate with one or more modules, i.e. allow data transfer between said application and said one or more modules. Moreover, application 130 may monitor how many users or businesses select each of the ads and then record what each person does at the website, thereby helping refine context and the relevance (and placement) of each of the ads while weeding out the less effective efforts. In other words, the application 130 preferably comprises a monitoring feature or is a network monitor. Moreover, the application 130 allows specific monitoring, e.g. according to predefined rules and/or limited to respective predefined actions of the user and/or limited to specific regions in a GUI and/or limited to one or more specific applications provided through a GUI. Therefore, advantageously, the data transfer between one or more users and the system can be improved by providing the one or more users with some data objects relating to the monitored action of the one or more users. Therefore, advantageously, the system is adapted to provide an improved network transfer, by avoiding unnecessary network transfer and preferably provide the data specific to the needs of the one or more users.

Regardless of the particular implementation, "software" may include software, firmware, wired or programmed hardware, or any combination thereof as appropriate. Indeed, application 130 may be written or described in any appropriate computer language including C, C++, Java, J#, Visual Basic, assembler, Perl, any suitable version of 4GL, as well as others. For example, returning to the above described composite application, the composite application portions may be implemented as Enterprise Java Beans (EJBs) or the design-time components may have the ability to generate run-time implementations into different platforms, such as J2EE (Java 2 Platform, Enterprise Edition), ABAP (Advanced Business Application Programming) objects, or Microsoft's .NET. It will be understood that while application 130 is illustrated in FIGURE 2 as including a number of sub-modules, business application 132 and third party modules 134 respectively, application 130 may include numerous other sub-modules (as in FIGURE 2) or may instead be a single multi-tasked module that implements the various features and functionality through various objects, methods, or other processes. Further, while illustrated as internal to server 102, one or more processes associated with application 130 may be stored, referenced, or executed remotely. For example, a portion of application 130 may be a web service that is remotely called, while another portion of application 130 may be an interface object bundled for processing at remote client 104. Moreover, application 130 may be a child or sub-module of another software module or enterprise application (not illustrated) without departing from the scope of this disclosure.

Server 102 may also include interface 117 for communicating with other computer systems, such as clients 104, over network 112 in a client-server or other distributed environment. In certain embodiments, server 102 receives data from internal or external senders through interface 117 for storage in memory 120, for storage in DB 135, and/or processing by processor 125. Generally, interface 117 comprises logic encoded in software and/or hardware in a suitable combination and operable to communicate with network 112. More specifically, interface 117 may comprise software supporting one or more communications protocols associated with communications network 112 or hardware operable to communicate physical signals.

Network 112 facilitates wireless or wireline communication between computer server 102 and any other local or remote computer, such as clients 104. Network 112 may be all or a portion of an enterprise or secured network. In another example, network 112 may be a VPN merely between server 102 and client 104 across wireline or wireless link. Such an example wireless link may be via 802.11a, 802.11b, 802.11g, 802.20, WiMax, and many others. While illustrated as a single or continuous network, network 112 may be logically divided into various sub-nets or virtual networks without departing from the scope of this disclosure, so long as at least portion of network 112 may facilitate communications between server 102 and at least one client 104. For example, server 102 may be communicably coupled to repository 135 through one sub-net while communicably coupled to a particular client 104 through another. In another example, some vendors 106 or customers 108 may represent local vendors 106 or "walk-in" customers 108, respectively, that physically interact with business 104 without use of network 112. In other words, network 112 encompasses any internal or external network, networks, sub-network, or combination thereof operable to facilitate communications between various computing components in system 100. Network 112 may communicate, for example, Internet Protocol (IP) packets, Frame Relay frames, Asynchronous Transfer Mode (ATM) cells, voice, video, data, and other suitable information between network addresses. Network 112 may include one or more local area networks (LANs), radio access networks (RANs), metropolitan area networks (MANs), wide area networks (WANs), all or a portion of the global computer network known as the Internet, and/or any other communication system or systems at one or more locations. In certain embodiments, network 112 may be a secure network associated with the enterprise and certain local or remote clients 104.

Client 104 is any computing device operable to connect or communicate with server 102 or network 112 using any communication link. At a high level, each client 104 includes or executes at least GUI 136 and comprises an electronic computing device operable to receive, transmit, process and store any appropriate data associated with system 100. It will be understood that there may be any number of clients 104 communicably coupled to server 102. Further, "client 104," business," and "user" may be used interchangeably as appropriate without departing from the scope of this disclosure. Moreover, for ease of illustration, each client 104 is described in terms of being used by one user. But this disclosure contemplates that many users may use one computer and/or terminal or that one user may use multiple computers and or terminals. In certain situations, users may include owners, bookkeepers, as well as third party or outside accountants. For the business owner, system 100 may provide or make available, for example, through client 104 and application 130: i) business status information (seven-day profit & loss report, daily bank statement); ii) customer information (contact information, recent purchases, payment history, credit report); and iii) product information (inventory levels, vendor information, unit cost). In another example, bookkeepers typically do invoicing, bill paying, payroll (whether directly or preparing data for a payroll service), and general banking. For this bookkeeper, system 100 may provide or make available, for example, through client 104 and application 130: i) transaction documentation (purchase orders, invoices); accounting basics (chart of accounts, accounts receivable, accounts payable, tax preparation); iii) human resources information (employee information, benefits tracking); and iv) banking activities (monthly statement reconciliation, business checking, business credit card transactions, customer credit card transactions). For outside accountants, system 100 may provide or make available, for example, through client 104 and application 130: i) a detailed, professional view of the business; ii) analytic tools to drill down to root causes of cash shortfalls or windfalls; iii) tools to project trends and test the effect of decisions; iv) sophisticated business reporting tools to summarize trends and status graphically for the owner; v) annotation tools so they can leave notes in the books for the bookkeeper and for their own future reference; vi) import and export from third party accounting or business software.

As used in this disclosure, business 104 is any person, department, organization, small business, enterprise, or any other entity that may use or request others to use system 100, namely application 130. For simplicity, business 104 may also be termed a client 104, which is intended to encompass a personal computer, touch screen terminal, workstation, network computer, kiosk, wireless data port, smart phone, personal data assistant (PDA), one or more processors within these or other devices, or any other suitable processing device used by or for the benefit of business 104. For example; client 104 may be a PDA operable to wirelessly connect with external or unsecured network. In another example, client 104 may comprise a laptop that includes an input device, such as a keypad, touch screen, mouse, or other device that can accept information, and an output device that conveys information associated with the operation of server 102 or clients 104, including digital data, visual information, or GUI 136. Both the input device and output device may include fixed or removable storage media such as a magnetic computer disk, CD-ROM, or other suitable media to both receive input from and provide output to users of clients 104 through the display, namely the client portion of GUI or application interface 136.

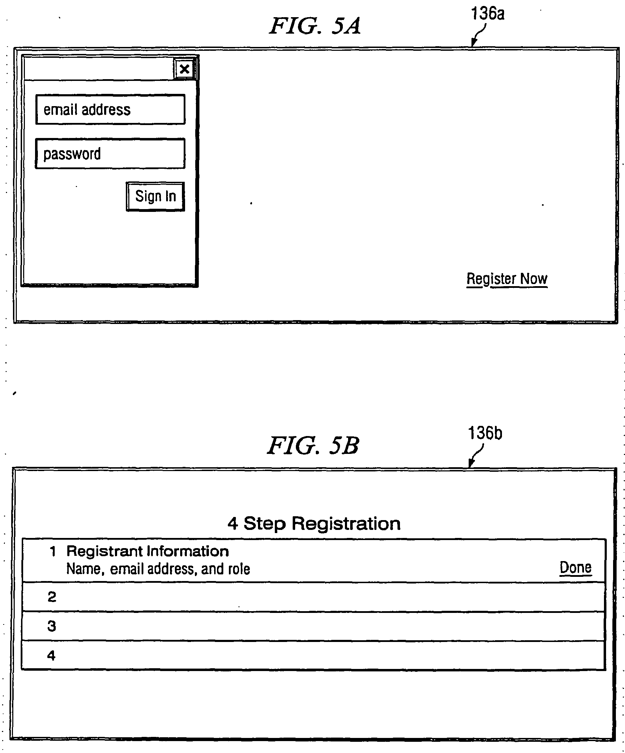

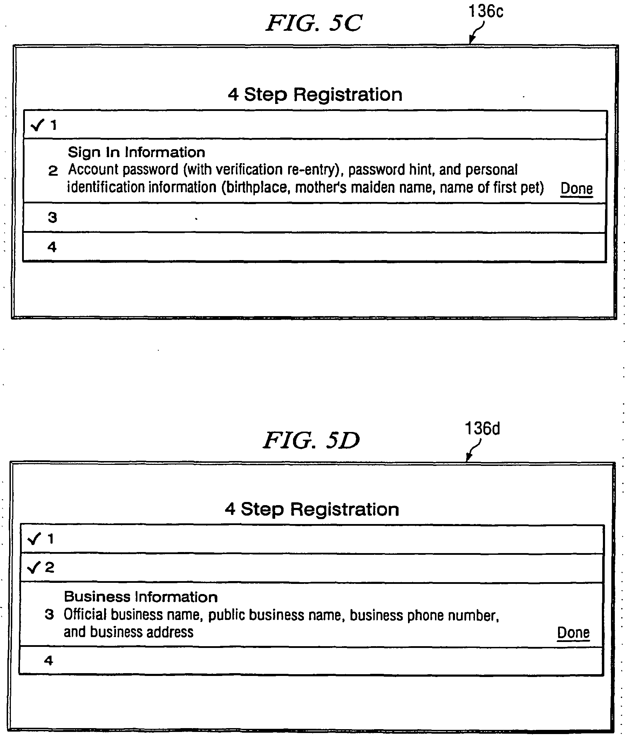

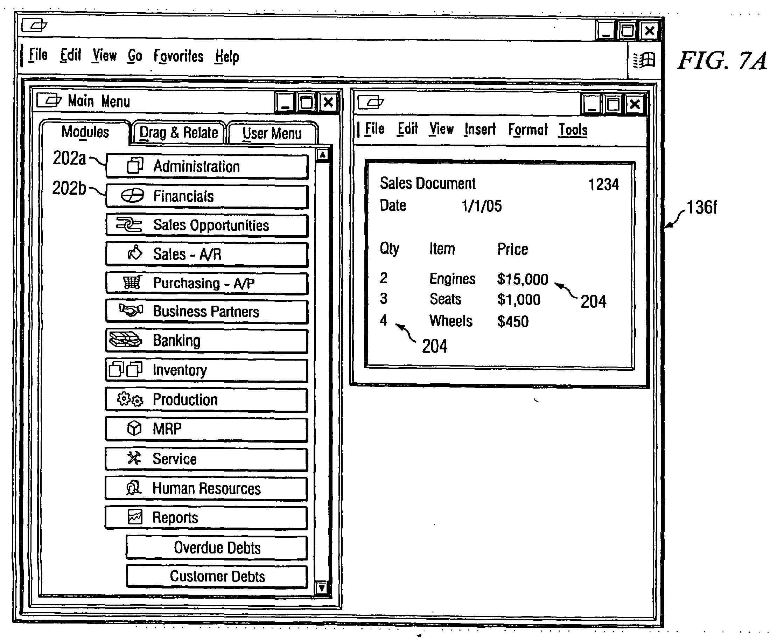

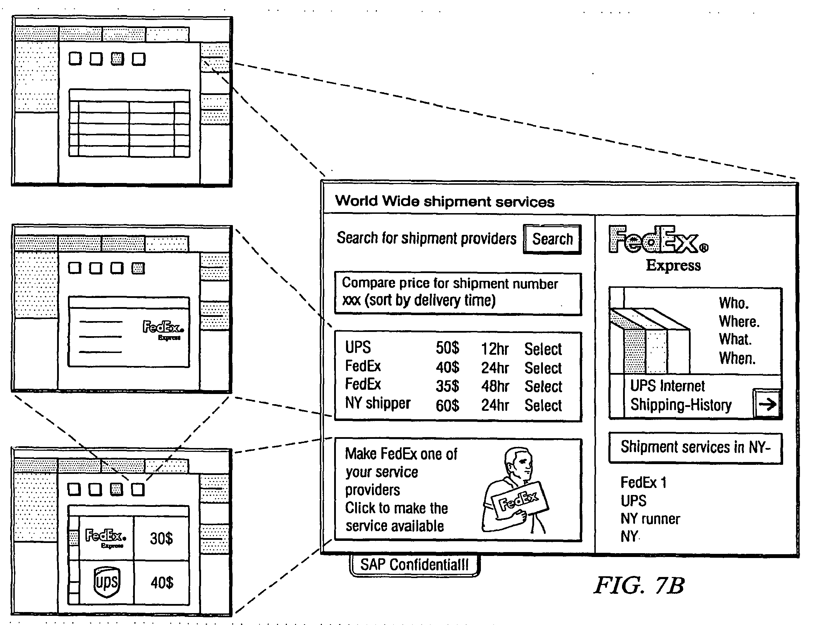

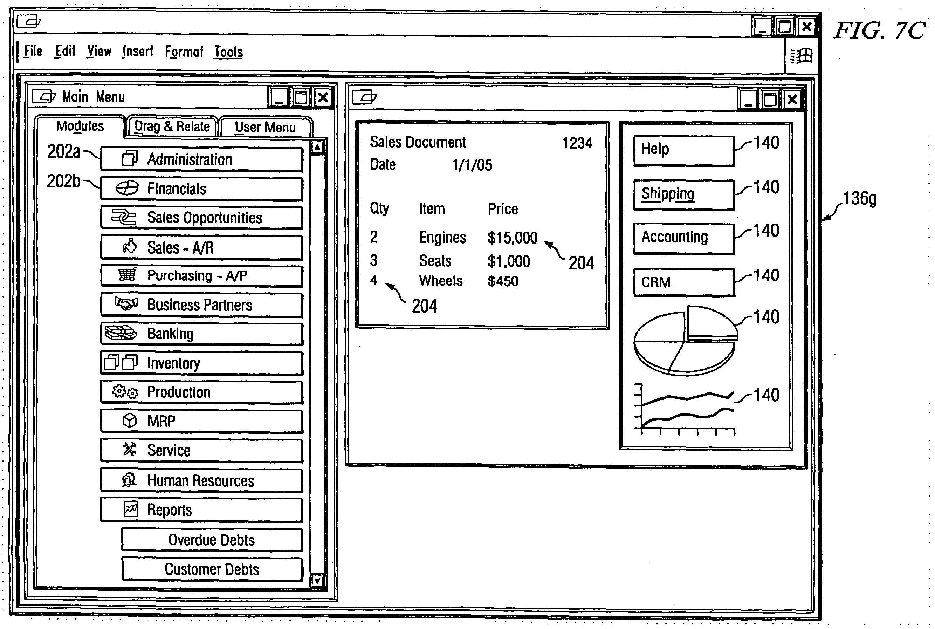

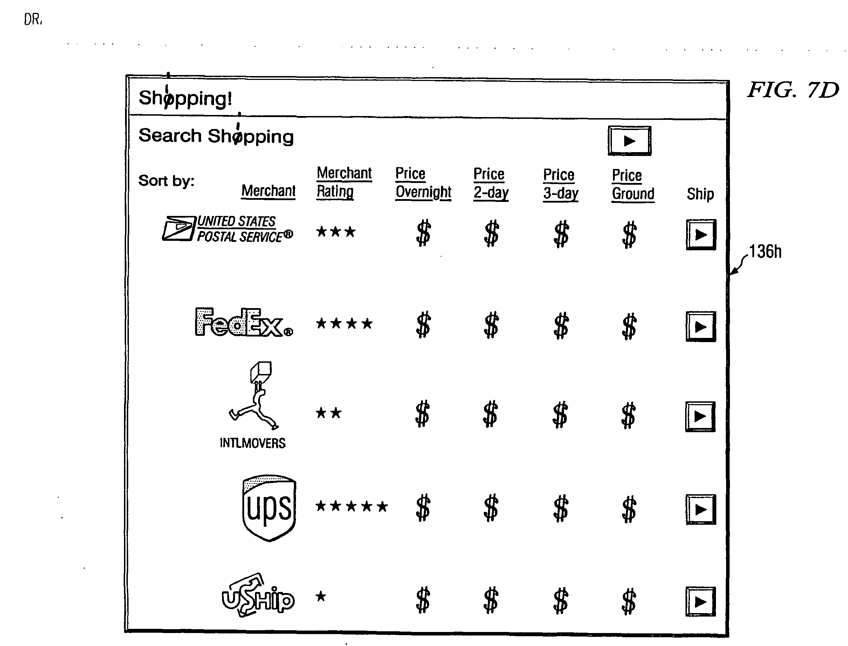

GUI 136 comprises a graphical user interface operable to allow the user of client 104 to interface with at least a portion of system 100 for any suitable purpose, such as viewing application or other transaction data. Generally, GUI 136 provides the particular user with an efficient and user-friendly presentation of data provided by or communicated within system 100. As shown in later figures, GUI 136 may comprise a plurality of customizable frames or views having interactive fields, pull-down lists, and buttons operated by the user. For example, GUI 136 is operable to display certain presentation elements 140 in a user-friendly form based on the user context and the displayed data. GUI 136 may also present a plurality of portals or dashboards. For example, GUI 136 may display a portal that allows users to view, create, and manage historical and real-time reports including role-based reporting and such. Generally, historical reports provide critical information on what has happened including static or canned. i.e. stored reports that require no input from the user and dynamic reports that quickly gather run-time information to generate the report. Of course, reports may be in any appropriate output format including PDF, HTML, and printable text. Real-time dashboards often provide table and graph information on the current state of the data, which may be supplemented by presentation elements 140. GUI 136 is often configurable, supporting a combination of tables and graphs (bar, line, pie, status dials, etc.), and is able to build real-time dashboards, where presentation elements 140 (as well the displayed application or transaction data) may be relocated, resized, and such. It should be understood that the term graphical user interface may be used in the singular or in the plural to describe one or more graphical user interfaces and each of the displays of a particular graphical user interface. Indeed, reference to GUI 136 may indicate a reference to the front-end or a component of application 130, as well as the particular interface accessible via client 104, as appropriate, without departing from the scope of this disclosure. Therefore, GUI 136 contemplates any graphical user interface, such as a generic web browser or touchscreen, that processes information in system 100 and efficiently presents the results to the user. Server 102 can accept data from client 104 via the web browser (e.g., Microsoft Internet Explorer or Netscape Navigator) and return the appropriate HTML or XML responses to the browser using network 112, such as those illustrated in **FIGUREs 5** and **7**.

Server 102 may also be communicatively coupled with a plurality of service providers or other vendors 106. As described above, these vendors 106 may be local or remote to business 104. Regardless of the location, server 102 preferably includes some reference or partnership with these vendors 106 to offer specific data, such as advertisements or other secondary content involving their services to business 104, which are automatically determined or identified based on user context. Moreover, application 130 may allow the particular business 104 to generate or otherwise provide feedback to service providers 106 to help advertisers to re-brand or mold one or more of their services to better fit the needs of the users. As an example, there may be provided data exchange between the business 104 and the vendor 106. Such services may include goods, services, consulting, or other similar offerings that may benefit business 104 in some way. In some cases, these services may be termed tightly coupled or loosely-coupled. Service provider 106 may offer tightly integrated services, which are generally services integrated into application 130. Such tight integration may offer seamless end-to-end business processes. These services may be monetized through transaction fees as a percentage of a transaction amount, flat fees, or any other agreed upon fee arrangement. Moreover, guaranteed advertising spending or minimum revenue share may be also offered. For example, some service providers 106 offering tightly-coupled services may include e-commerce providers, shippers, and payroll processors. These tightly coupled services may provide some or all of the following example functionality (as well as others not listed):

i) E-commerce: quickly and easily create a complete, secure online store. To achieve this, it may help create and manage an online storefront as a preferred GUI with customizable shopping cart and checkout pages, organize product information, and track inventory levels. Moreover, it may help business 104 list products on auction and shopping sites, process online payments with tools to prevent fraudulent transactions, manage orders in real time, and give customers online order status. Business 104 may use detailed product sales and performance reporting to help optimize online strategy. In particular, this can be carried out by providing data exchange;

ii) Shipping: may provide access to shipping with the market leading, local, or discount carriers. This service may provide a single interface to access these carriers with preferred rates and discounts, which may be dynamically kept up-to-date using web services or other similar technologies. The shipping service may help business 104 manage shipping activities more efficiently by storing recipients contact information, manage all shipping history and activity in one central location, as well as customize email notifications for shipments and shipment preferences.

iii) Payroll services: calculate paycheck and tax obligations for each employee, print and deliver checks or handle direct deposit, deliver management reports to the user's or another contact's inbox, offer automatic check signatures, handle W-2s, tie-in with 401(k) and Section 125 mutual fund plans potentially allowing employees to set up automatic deductions from their paychecks, and file state and federal payroll taxes for business 104.

Conversely, there are often a number of loosely-coupled on-demand services that are not embedded (or integrated) in application 130 and offered using a web services API. In other words, preferably, there may provided services that can be directly reached and/or accessed by data exchange. There may also be provided services that cannot be directly accessed. As an example, by data exchange, a mere address of the respective service, application etc. may be provided. Said application may then be reached by following said address. Using simple web technologies, server 102 may create an on-demand services platform to make it extremely easy for service providers 106 to offer their services and for users to buy them. Hence, said server may allow a data exchange between the service providers 106 and the users 104. In particular, may allow the service providers 106 to provide one or more users with a service by data transfer. Said data transfer can comprise the entire service, parts of a service and/or or an address to a service. Such providers 106 may pay a service fee or some percentage of revenues service providers generate on the platform. For example, some loosely coupled service providers 106 may include financial advisors, lead generators, data enhancers, inventory optimizers, human resources, warehouse outsourcing, IP telephony, debt collection, and business lifecycle management. In this example, the financial advisor may help establish financial goals and then meet or exceed them. This service provider 106 may compare the business 104's performance and spending to others of the similar size and type in twenty key dimensions. Further, such financial services may facilitate or provide:

forecasts of income, expenses, cash and debt;
recommendations for business improvement and growth;
accounts receivable management and debt collection;
inventory control and management;
recommendations for reducing costs; and/or
debt management and access to tailored loan packages.

The lead generation service may help business 104 by providing targeted leads from a database of, for example, more than 14 million businesses and 250 million consumers, perhaps compiled by a third party provider of business and consumer data. This service may allow users to define their own criteria to select leads based on geography, business size and type, or other demographic information.

Data enhancement generally improves at least a portion of the data used or owned by business 104 - from hundreds to millions of records - by offering or using data cleansing and validation processes to keep information up-to-date and accurate. Such processes may include eliminating duplicates, correcting and updating addresses and area codes, adding industry information, and enhancing customer information with email addresses and phone numbers. Further, by adding new fields from a service provider's database to the business 104's list, unique selection criteria can be tailored to industry, campaign or business objectives. Inventory optimization may help manage inventory to optimal levels, reduce carrying and logistical costs, increase service levels, and improve asset utilization and inventory performance. Further, this service may offer a so-called "what if" analyzer demonstrating or presenting how changes in inventory and logistics system may affect costs, inventory levels, and delivery times. The example HR service may offer one or more solutions that increase productivity, ensure compliance, improve employee retention, find and manage temporary staff, and control costs. Such solution may include payroll, benefit management, 401(k)/Retirement Services, expense management, and/or tax and compliance management.

Warehouse outsourcing generally offers the easiest way to quickly fulfill customer orders without managing inventory or, perhaps, even a warehouse. A top-tier logistics company will warehouse, inventory, pack, and ship products. Telephone, mail, and web orders can also be process. IP telephone service may dramatically reduce phone service costs of business 104. This service normally delivers local and long distance calling anywhere in the world for one low price. IP telephone generally uses existing high-speed Internet connection instead of standard phone lines. Business 104 may save money and receive features like caller ID with name, call waiting, a dedicated fax line, voicemail, teleconferencing, and web conferencing.

The example debt collection service is typically an efficient, cost-effective way to secure outstanding payments and recover bad debt. For example, this service may automatically generate letters, faxes, or emails and prompt the user for telephone calls are used to quickly settle the account. In another example, a flexible escalation process is tailored to users' preferences and can be adjusted for each individual customer. The business lifecycle management service may help manage the interface between business performance and personal wealth and income. This service may further offer optimized plans and what-if analysis for revenue recognition and strategic spending, reinvestment and retained earnings, personal compensation and retirement savings, as well as analyze the value of business 104 as an investment and determine its valuation.

The forgoing providers 106 should not be considered an exhaustive or limiting example. Moreover, the characterization of a particular provider 106's services as tightly-coupled or loosely-coupled is merely for example purposes only and is not meant to limit the scope of this disclosure.

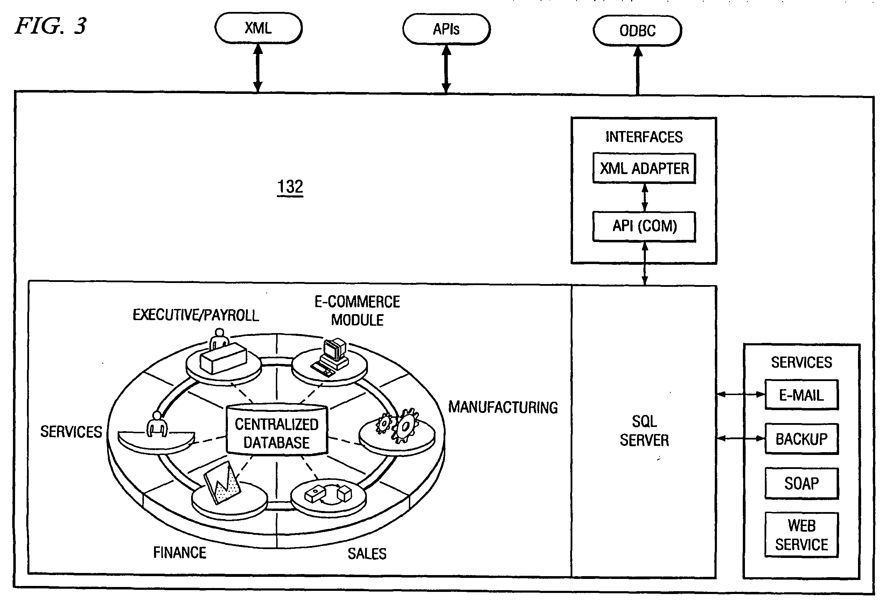

FIGURE 2 illustrates an example hosting infrastructure implementing various processes and modules in accordance with one embodiment of the system of FIGURE 1. Of course, while described as a hosted solution, any similar internal or third party implementation may suffice and be within the scope this disclosure. Returning to the illustration, application 130 includes a business application 132, as well as a number of services or modules 134. In this example, business application 132 may be developed or owned by a first entity (even though potentially hosted by another), while some or all of the service modules 134 may be developed or owned by a secondary entity (who may also be the host). While described in more detail in FIGURE 3, application 132 may be considered business software or solution that is capable of interacting or integrating with local and third party modules 134 to provide the user with context-based presentations, advertisements, competitive bidding, and other secondary content, as a preferred form of data exchange. More specifically, an example application 132 may be a computer application for performing any suitable business process by implementing or executing a plurality of steps. This example application 132 may leverage knowledge of the demographic information of the user obtained during the registration process (and further refined throughout usage of the application) to provide personalized ads. As a result, application 132 may initially provide personalized advertising using the known demographic information, but intelligently, e.g. automatically identify and determine contextuality to provide highly relevant and personalized, for example, contextual text (and banner) ads over time. In other words, said application 132 preferably is adapted to obtain specific, e.g. user related data, identify said data and, based on said data, provide a return of data to the user. This can preferably be carried out by parsing on or more databases using the user related data, wherein the user related data can be any kind of data. Advantageously, the user related data needs not to be manipulated any further, but preferably can be used directly for parsing the database. Hence, advantageously, it is not necessary to generate any keywords from the user related data. According to a preferred embodiment, one or more keywords can be generated from the user related data. Said keywords can then be used to parse the database.

Monetization module 134a may help application 130 to provide business process oriented matching context. To achieve this, monetization module 134a may receive or request user context combinations from application 132, identify further user combinations based on past usage or advertisement success, or identify the user context using any other appropriate technique in order to, among other things, present advertising, as preferred data object(s) and/or presentation element(s) oriented to the particular process. Once the user context combinations are identified or received, then module 134a may define or calculate the matching vectors and their weights, sort the combinations based on a priority or timeline, or otherwise process the user context to attempt to optimize the user's experience and advertising revenue. These contextual ads may include various categories such as textual ads and branded ads, as preferred data objects and/or presentation elements. In this example, the textual ads may be, among other things, key word based, content center based, site mapped, business process oriented, click-based, and such, as preferred business context. The branded ads may be purchased by third part service providers 106 and include graphical banners, text, or other multimedia presentations or content. Illustrated content center module 134b generally is any module that may include, reference, generate, or otherwise present a business community that serves as a target for advertising and collaborates to make the business more efficient services related to the business processes and business best practices. For example, the content center module 134b may include local services, business management best practices, a business process oriented content center, community forums and blogs, and many others.

For example, the small business services module 134c may comprise a "one-stop" center to enhance aspects of online operations. Such services may include: i) web hosting or tools and infrastructure to build a professional looking web site; ii) merchant solutions - platform to build, manage, and market an online store; iii) business email - communications with custom email addresses, spam protection, and email storage; iv) domain registration; v) marketing tools - local enhanced listing and sponsored search; vi) internet access; and vii) recruiting services or online job postings. Other services may include those provided by third-party vendors 106 including VOIP (Voice over Internet Protocol) and messenger services. For example e-commerce module 134d may generally allow business 104 to establish an on-line presence. This may include the offering of services, becoming an internet merchant, or other network-based business. Accordingly, module 134d may offer wizards, as preferred application(s), to develop on-line business processes, tools to develop web pages or microsites, and many other tools and services.

FIGURE 3 illustrates more detail of a preferred example business application 132 that, among other things, provides business functionality to the user and dynamically presents elements based on user context in accordance with one embodiment of the present disclosure. For example, such applications 132 provide a user with the ability to view and interact with elements displayed based on his user context, such as location or role, and other data - as well as the respective metadata - present in the particular interface. In other words, one or more applications 132 preferably allow data exchange in order to categorize or even identify a specific user. This can be achieved by parsing a database using e.g. the login data of a user and/or the data provided by the user. Therefore, preferably, the network traffic created by said user can be monitored and evaluated. Hence, according to the categorization and/or identification of the user, specific data can be provided from a database to the user. Put another way, application 132 preferably determines the user's context, identifies certain data objects retrieved for the respective user interface, and displays presentation elements based on such user context and data objects. These ads and the processing to determine the appropriate content to display may be partially or fully distributed the hosted services 134 or performed internally by application 132 as appropriate. As illustrated in FIGURE 19, application 132 (or 134) may determine the appropriate user context-data combination using any appropriate source of user context including business 104, information, data associated with the user, application 130 (or one its components), previous or current actions performed by the user, as well as metadata, data entered by the user, and many other sources. More specifically, application 132 may use these sources to identify some portion of the user's role in a business, his business, a business application or process, and/or business activity of the user, business, or process or data that may assist application 132 in providing a contextual solution, by e.g. collecting data of the user and/or monitor the actions of the user and/or network traffic of a user and/or data entered by the user, etc. For example, such information may include: (1) information that is related to the user due to explicit or implicit collaborative relationships such as team/project membership or community membership; (2) information that is similar to a given business object in a semantic space based on text retrieval and extraction techniques; (3) recent procedures or other actions of the user; (4) other people performing the same or similar activity; (5) explicit relationships on an organizational or project structure; (6) information about the underlying business context; and/or (7) information about the people involved in a collaborative process. Application 132 may dynamically update or replace the presentation elements as the user context changes and/or as the data objects change; in other words, certain processing preferably is determined, at least in part, at run-time based on one or more variables. For example, as the user proceeds through the particular business process (or changes processes), application 130 may automatically update the presentation elements (such as sponsored advertising or contextual help) based on this progress or step in the process, by identifying and manipulating the respective data. More specifically, application 132 may allow for or provide directed advertising, related help text, or other presentation elements that are selected or generated based on the user and the respective data on the screen. In other words, application 132 preferably provides data based on the collected data of the user. Advantageously, such dynamic presentation within application 132 may deliver quick access to highly accurate, business-critical information, empower business users, or provide end-to-end visibility, while concurrently offering an easy-to-use interface.

For example, application 132 may be a composite application, or an application built on other applications that includes an object access layer (OAL) and a service layer. In this example, application 132 may execute or provide a number of application services, such as customer relationship management (CRM) systems, human resources management (HRM) systems, financial management (FM) systems, project management (PM) systems, knowledge management (KM) systems, e-commerce compatibly and functionality, and electronic file and mail systems. Such an object access layer is operable to exchange data with a plurality of enterprise base systems and to present the data to a composite application through a uniform interface. The example service layer is operable to provide services to the composite application. These layers may help the composite application to orchestrate a business process in synchronization with other existing processes (e.g., native processes of enterprise base systems) and leverage existing investments in the IT platform. Further, composite application 132 may run on a heterogeneous IT platform. In doing so, composite application may be cross-functional in that it may drive business processes across different applications, technologies, and organizations. Accordingly, composite application 132 may drive end-to-end business processes across heterogeneous systems or sub-systems. Application 132 may also include or be coupled with a persistence layer and one or more application system connectors. Such application system connectors enable data exchange and integration with enterprise sub-systems and may include an Enterprise Connector (EC) interface, an Internet Communication Manager/Internet Communication Framework (ICM/ICF) interface, an Encapsulated PostScript (EPS) interface, and/or other interfaces that provide Remote Function Call (RFC) capability.

It will be understood that while this preferred example describes a composite application 132, it may instead be a standalone or (relatively) simple software program integrated with other hosted modules 134 or functionality. Regardless, application 132 may also perform processing automatically, which may indicate that the appropriate processing is substantially performed by at least one component of system 100, such as that illustrated in FIGURE 2. It should be understood that automatically further contemplates any suitable administrator or other user interaction with application 132 or other components of system 100 without departing from the scope of this disclosure.

Advantageously, regardless of the particular hardware or software architecture used, application 130 preferably is generally capable of allowing multiple users from one or more businesses 104, determining secondary content (such as advertisements) based on the context of the particular user, and execute various other business processes and techniques. In other words, application 130 preferably allows to monitor and identify different users. Further advantageously, the application 130 preferably allows to provide different user with different information, i.e. carry out data exchange with different users, wherein each user obtains customized data, e.g. according to his login data and/or the monitored actions and/or network traffic. Therefore, as also described in more detail elsewhere in the disclosure, this user context may be based on user information, as well as business information and/or application data. Some of these processes, such as providing target secondary content and providing feedback on such content, are illustrated in certain flowcharts described below. The following descriptions of the flowcharts focus on the operation of application 130, or one of its components 132 or 134, in performing the respective method. But system 100 contemplates using any appropriate combination and arrangement of logical elements implementing some or all of the described functionality. For example, some or a majority of the processing or other techniques may be implemented by business application 132, one of the service components 134, or other invoked or referenced libraries or sub-modules not illustrated.

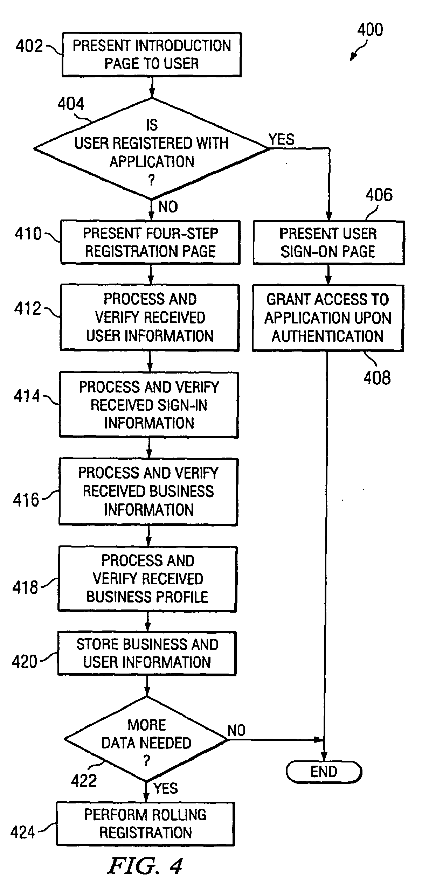

**FIGURE 4** is a flowchart illustrating an example method 400 for processing user registration into system 100. Generally, method 400 describes the registration of a new user of application 130 and the various processes involved in collected needed or optimal user and business information. Illustrated method 400 begins at step 402, where application 130 presents an introduction page to a user. This introduction page is typically presented based on a request from the client 104, such as an HTTP request for a web page. The introduction may present information such as, for example, marketing text, feature descriptions, a narrated video tour, testimonials from other businesses 104 and customer 108, and advertisements for partners or vendors 106 (e.g. offers of free subscriptions). Next, at step 404, application 130 determines if the requesting user is already a registered user. Such a determination may be made using e.g. a cookie, a user selection, or via other conventionally used technique(s). If the user is already registered, then application 130 grants presents the user with a sign-in page at step 406 (illustrated at FIGURE 5A as GUI 136a) and grants the user access to application 130, or more specifically business application 132, upon authentication at step 408. The sign-in page 136a may include or present a user name field that uses an email address, remembers access within cookie if user requests, and field is pre-populated with user's address. Page 136a also typically includes a password field that may be user-specified and hint available if the user forgets. This password may first be sent through email and be as complex as necessary to help assure security. The sign-in page or the first page after authentication may also display application news and insights such as new features, new services, new partners, how-to tips, small-business advice, and others.

But if the user is not a registered user, then application 130 may the display the general registration process that the new user will follow at step 410. For example, such registration may include four steps, namely user information, sign-in information, business information, and business profile information. In this example, application 130 collects and verifies user information at step 412 using GUI 136b illustrated at **FIGURE 5B.** This information may include the registrant's first and last name, the registrant's email address (typically used as username for sign in and provides immediately-useful contact information), and the registrant's role in business 104. This role may be selected from a limited, very general list to help normalize roles across businesses 104. In certain cases, this list presented to the user after business data is gathered so that it may be populated based on the business type or other business context. Next, at step 414, application 130 collects and verifies sign-in information using GUI 136c illustrated at **FIGURE 5C**. This sign-in information may comprise the registrant's password (perhaps entered twice to ensure accuracy), a password hint, and the registrant's personal identification information to enable support to verify user.

As illustrated, application 130 then collects and verifies the business data to help provide some context and enable subsequent rolling registration. For example, at step 416, application 130 collects and verifies business information such as the business names (often both official or how the business is known legally and public or how the business is known to its customers), phone number, business address, web address, primary contact email address, or other useful business contact information, such as illustrated **FIGURE 5D** using GUI 136d. Application 130 may then, at step 418, collect and verify business profile information using, for example, GUI 136e as illustrated at **FIGURE 5E**. This interface may request the number of employees, which is used to define initial product configuration and to change advertising exposure. The interface may also collect the known or expected annual revenue range and the NAICS (North American Industry Classification System) code. This code is a standard business activity numbering used by the IRS and, if it is not known by the user, then application 130 may invoke a wizard to guide the user to the appropriate code. This collected information is then stored in repository 120 for subsequent processing at step 420. For example, if more information is needed (as illustrated at decisional step 422), then application 130 may execute a rolling setup as appropriate at step 424. This rolling setup may be performed as business processes are executed or requested and may include, among other things, conversion from prior legacy business applications and adding employees, inventory, and other details.

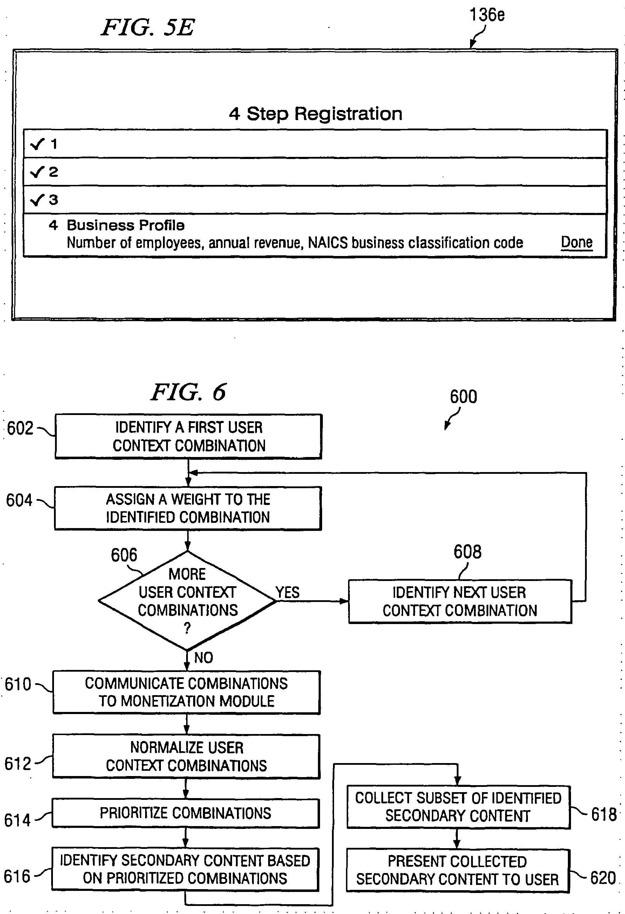

Once the user and business information has been collected, this demographic information may be used to help determine user context combinations. These context combinations are typically further coded based on prior advertising success or failure, current data or business processing, business status, and many other components or criteria. These context and advertising techniques may be run concurrently with any business processing to allow application 130 to provide advertisements or other content on an "as-needed" basis. **FIGURE 6** is a flowchart illustrating an example method 600 for processing such user context as implemented by application 130. Method 600 begins at step 602, where application 130 identifies a first user context combination. For example, application may identify the particular user and his role, the business type, or other demographic information, as preferred business context of said user. The context may then be supplemented based on the particular processing occurring and the data involved in such processing. The context may include any number of combinations. For example, a first combination may be coded using the user's role, the business type, and the customer of the sales order. A second combination may be coded based on the business location, the customer location, and total weight of the order. Yet a third example combination is coded using approved vendors of each item, the associated costs of each item, expected shipping date from the vendor, and shipping costs. It should be understood that these combinations are for example purposes and any number of combinations based on any metadata or data may be used. Once a first user context combination is identified, application 130 may then assign a weight to the identified context combination at step 604. This weight may be based on any appropriate criteria or intelligence such as the importance of the particular piece of demographic data in the current business process. As a further example, the weight can be any number given by an authorized user, such as e.g. an administrator. Application 130 then continues to collect, identify, and/or calculate further user context combinations as appropriate and as illustrated in steps 606 and 608. Once these combinations have been gathered, then application 130 preferably communicates them to a monetization module 134a for subsequent processing at step 610. This communication may be a local inter-process communication or a transmission to a distributed module. In other words, said communication represents a transfer of data.

After receipt, monetization module 134a preferably manipulates the received data, preferably normalize the user context combinations at step 612. Such normalization may include transforming roles or business types to an expected format, normalizing weights, or any other data massaging. For example, a first business 104 may identify a first role as a supervisor, while a second business 104 may identify the first role as a manager. This can be achieved by transmitting user related data and parse said data in a database. In this example, module 134a may automatically normalize these first roles to one identifier to allow for concurrent processing of both businesses for subsequent processing. Once the context information is in a suitable format, then application 130 preferably processes the combinations to determine the secondary content to select and present to the user. In other words, after identifying said user related data in the database, the additional data, relating to said user related data preferably is obtained from said database. For example, at step 614, monetization module 134a may prioritize the combinations. This priority processing may include sorting, dropping unimportant or unrelated context information, or any other processing. Next, module 134a identifies secondary content from the presentation elements 140 stored in memory 120 at step 616 based on the user context information. As described above, this content may also (or partly) be stored remotely or may be dynamically retrieved from other locations or parties as appropriate. This identified content may then pared down using any criteria at step 618. For example, application 130 may collect only content associated with the higher-priority context combinations. In another example, application 130 may determine a suitable number of advertisements or other content elements 140 based on the resolution or the size of the user's interface. In a further example, application 130 may collect certain secondary content based on partnerships or deals with certain vendors or service providers 106. Once collected, at least a subset of this secondary content preferably is then presented to the user in some fashion as shown at step 620.

**FIGUREs 7A-D** illustrate example graphical user interfaces (GUIs 136f, g, and h respectively) of application 130 for processing user contexts as described in method 600. Generally, GUI 136 provides a similar front-end for local or distributed application 130. Interface 136 may be presented by a web browser that displays appropriate network pages including HTML, Java, PHP (self-referential PHP: Hypertext Preprocessor), ASP (Active Server Pages), or other pages populated, at least in part, by application 130. In this case, each service 202 preferably includes at least a portion (whether frame, tab, or window) for displaying a visible portion of data elements 116 (often transaction data 202) and another portion for presentation elements 140. Each portion may be hidden, minimized, or otherwise placed out of sight of the user, while still being considered "presented." In certain embodiments, data elements 116 may contain only the transaction data 202; but in other cases, data element 116 may also include foreign keys, record identifiers, and other data storage-oriented information that may not be pertinent or useful to GUI 136. As used herein, transaction data is any application or business data that is stored or otherwise referenced in data elements 116. For example, GUI 136 may present i) financial accounting such as financial transactions, including general ledger, account setup and maintenance, journal entries, foreign currency adjustments, and budgets; ii) bank transactions such as cash receipts, check writing, deposits, advance payments, credit card payments, and bank reconciliation;

iii) sales and distribution data including price quotes, customer orders, delivery data, stock balances, and other invoices and accounts receivables; and iv) purchasing information such as vendor contracts and transactions, issuing purchase orders, in-stock numbers, the value of imported items, returns and credits, and other payment transactions. In another supplemental or complementary example, GUI 136 may present customer relationship management (CRM) data, which may include i) sales opportunity management data from the first phone call to the successful close of a transaction; ii) business partner information about customers, resellers, and vendors, including profiles, contact summaries, account balances, and sales pipeline analysis; and iii) service management information involving service operations, contract management, service planning, tracking of customer interaction, and customer support.

First example GUI 136f presents a menu for allowing the user to easily move between respective businesses modules which can include applications and/or application modules, templates, macros, computer program language, etc., processes, and services 202 and data 204. Such an interface may allow the user to drill down on desired information or other related or child transaction data. Preferably, the user can follow a display, can be provided with display data and information easily to follow, etc. According to a preferred embodiment, the user can be provided with drop down lists, a tree structure, icons to select, e.g. by clicking, etc. More specifically, interface 136f may include a functional area with a plurality of such processes and services 202, each with one or more sub-levels, and some data. For example, illustrated GUI 136f preferably includes a number of processes or services 202, specifically administration, financials, sales opportunities or leads, accounts receivable, accounts payable, and others through reports. As illustrated, report process 202 includes two sub-levels: overdue debts and customer debts. The example right-hand side of GUI 136f presents a sales order with a plurality of data 204. For example, the illustrated sales order includes header information, such as an order number and order date, and a number of order lines with various details such as items, amounts, and price. This header or the lines may further include hidden data 204, or data that is not presented on this particular screen, such as add on charges, taxes, shipping location, comments, salesman, kits, and others as preferred data and/or data elements and/or files. The data presented, hidden, or otherwise collected or calculated may be based on the user's selection of process 202, the particular stage and/or step of the process, and/or any other criteria. Once the respective data is presented (or concurrently with the presentation), application 130 may determine the context of the user based on the process and the current step, the meta data and data involved, and the user demographics. As described more fully elsewhere in this disclosure, this context may be partially predetermined based on information gathered during user and/or business 104 registration.

Once the appropriate user context-data combinations are identified, then application 130 preferably determines presentation elements 140 to be presented to the user using processing similar to that illustrated in **FIGURE 7B**. At this high level example, application 130 preferably determines appropriate service providers (whether tightly or loosely coupled) based on the user context and preferably allows the user to select one of these providers. More specifically, application 130 may first identify first level secondary content that includes advertisements (whether integrated in application 130 or provided by another application or process), buttons or other interactive elements, and such. For example, application 130 may determine that the optimal (or desired) use of these combinations may result in the appropriate advertisements as preferred data object and/or presentation element and other secondary content being illustrated help content, a shipping service, an accounting process, a CRM process, and several graphical analyses of business data (see GUI 136g illustrated in **FIGURE 7C**). If the user selects one of these elements 140, then preferably second level secondary content may be provided, which advantageously provide more detail or options for the respective first level secondary content. Continuing this example, the user may select the shipping element 140, resulting in example GUI 136h illustrated in **FIGURE 7D**. This e-commerce functionality preferably helps the user select a shipper for this particular order. The presented shippers may be partially based on providers pre-selected by the user, then supplemented by intelligently processing the user context combinations. In another example, the user may dynamically select a particular shipper based on a secondary user or business context. Based on any particular combinations of transaction data 202 and the context of the user, GUI 136 preferably also displays presentation elements 140 (described in more detail above) as illustrated in FIGURES 7B-D. Of course, these interfaces are for example purposes only and application 130, or its components (such as 132 and 134) may provide any suitable interface operable to display at least transaction data 202 and one or more presentation elements 140 - indeed, such displayed information may be communicated or presented in any suitable format or layout.

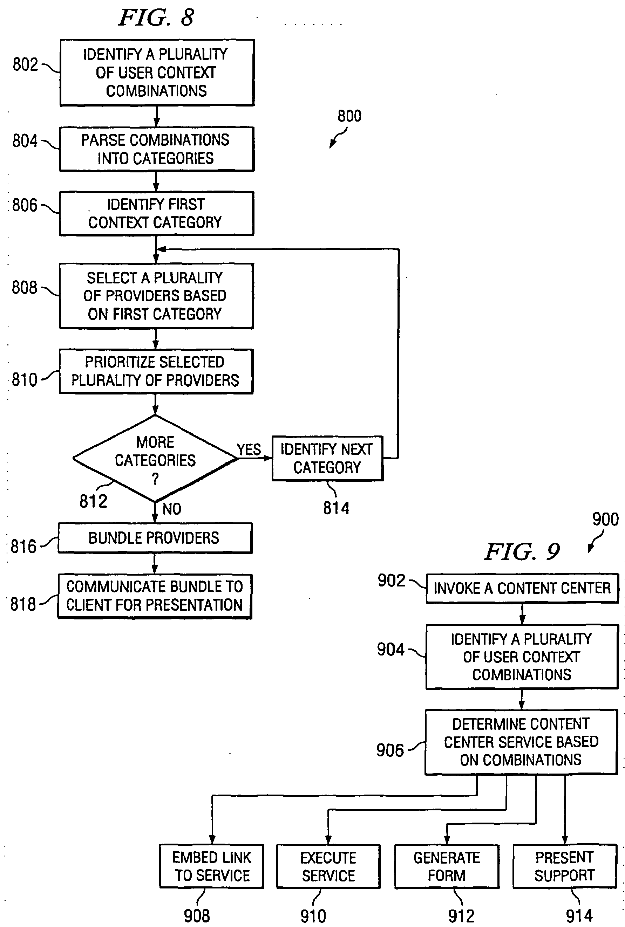

**FIGURE 8** is a flowchart illustrating an example method 800 for providing dynamic contact pages based on user context. Advantageously, this technique may be executed automatically based on the business process being performed for business 104 or at the request of the particular user. For example, application 130 may automatically communicate a contact list of service providers 106 to the client when an invoice is created. Hence, an automatic exchange of data may be provided. Advantageously, the network traffic can be optimized by proving the user in a simple and fast manner with correct information and/or data at a given time, without the necessity of the user to specifically request said data. Therefore, further advantageously, the system performance is more efficient regarding to the workflow of the user.

Generally method 800 preferably describes application 130 collecting user context information of the particular user and dynamically and efficiently determining one or more service providers 106 for presentation to the user in a contact list or "yellow pages" type format. For example, illustrated method 800 begins at step 802, where application 130 preferably determines the user context, potentially including a plurality of user context combinations of demographic information and application data. The user context combinations preferably are then parsed into context combinations as appropriate at step 804. Such categorization may assist in quickly identifying providers 106 for the respective portion of the business process. For example, application 130 may parse the combinations into customer 108 associated combinations, business 104 associated combinations, item associated combinations, and such.

At step 806, application 130 preferably identifies the first context category. Next, it preferably selects one or more providers 106 associated with this category at step 808. The selection may be based on location, provider type, contracts, or other criteria. Application 130 may then prioritize the providers 106 at step 810 using individual criteria, such as prices, advertising deals, expected ship times, and such. If there are more categories to be processed at decisional step 812, then application 130 preferably identifies the next category and processing returns to step 808. Once the appropriate providers 106 have been identified, then application 130 preferably bundles the provider information at step 816 and communicates the bundle to the client at step 818. It will be understood this gather information may include only a pointer to speed up processing and reduce communication requirements. Once the client receives the bundle and presents a subset or when the user selects a particular provider 106, then application 130 may communicate the appropriate contact information at step 818. For example, this contact information may include specific data, in particular as a text file, a html file, an xml file, etc., such as a phone number, a website, in particular by providing a hyperlink, an email address, or any other identifier that may assist business 104 in the particular business process.

**FIGURE 9** is a flowchart illustrating an example method 900 involving the content center module 134b. Method 900 begins at step 902, where application 130 preferably invokes content center module 134b. At any subsequent appropriate time, application 130 preferably determines a plurality of user context combinations at step 904. Such determination may occur over time such as a user/business profile 145 generated at user registration, which may be logically supplemented by rolling setup, application data, and other contextual information. Based on this user context, application 130 may then determine one or more content center services at step 906. For example, application 130 may embed a hyperlink to the determined services in the interface at step 908. In another example, application 130 may execute the particular service at step 910. In a further example, application 130 may generate a form as illustrated at step 912. In yet another example, application 130 may reference invoke, or otherwise present support services at step 914. While described singularly, it will be understood that application 130 may perform more than one of these processes to efficiently present data and/or applications, such as content center services in a user friendly manner. Moreover, these example processes may represent a subset of the various manners in which application 130 can present such content center services.

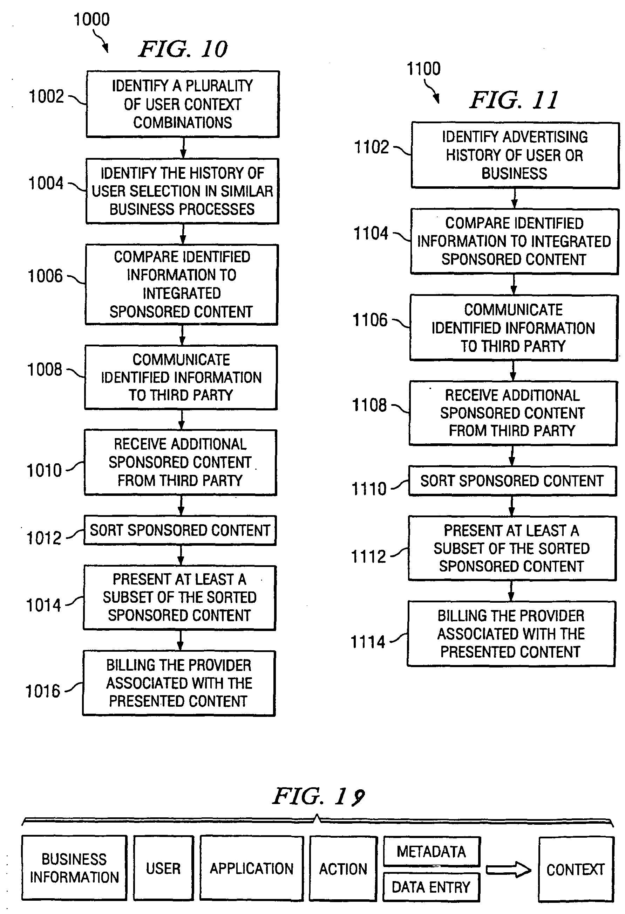

**FIGURE 10** is a flowchart illustrating an example method 1000 for providing target advertising based on user context. Such target advertising may provide the host of, the developer of, or another entity associated with application 130 with fees from sponsored content or other advertising involving a particular service provider 106. The fees may be flat fees, fees associated with a number of active hits, fees associated with the amount of displays, or any other dynamic or static criteria often determined by contract provisions. Method 1000 begins at step 1002, where application 130 identifies a plurality of user context combinations. As described above, these combinations may represent a number of different context pairs or groupings at any granularity stored in one data structure, object, record, or file. Next, at step 1004, application 130 may identify the history of user selections in similar situations as that currently in process by application 130. These user selections may include purchases, selected or invoked links, or any other input or selections made by the user or users as appropriate. For example, if the user is currently invoicing a customer, then application 130 may look at the prior requests or selections by the user for other invoices. Based on this identified information, application 130 may determine sponsored content integrated into or tightly-coupled with the respective module or business process at step 1006. At step 1008, application 130 may then communicate this identified contextual information to a local or remote third party, such as the entity hosting the particular module. Once processed, then application 130 may receive additional sponsored content from this third party at step 1010. Regardless of the particular technique for gathering sponsored content, application 130 preferably sorts the sponsored content using any suitable parameters at step 1012. For example, application 130 may determine that some content is more appropriate for the user, business or process. In an alternative or complementary example, application 130 may determine the level of revenue or cost associated to help determine the prioritization. At step 1014, application 130 then preferably presents at least a subset of the sponsored secondary content to the user via GUI 136. Next, the providers 106 associated with the selected sponsored content preferably are billed at step 1016. As described above, these bills may include or consist of flat fees, number-based or success-based fees, or others. Moreover, each bill may be physically or electronically transmitted to the particular provider on any time basis, including per instance, per week, per month, and so on. Further, instead of a traditional bill, a financial or billing account of the particular provider 106 may merely be debited or credited as appropriate.

**FIGURE 11** is a flowchart illustrating an example method 1100 for providing target advertising based on previous advertising. As with method 1000, such target advertising may provide the host of, the developer of, or another entity associated with application 130 with fees from sponsored content or other advertising involving a particular service provider 106. The fees may be flat fees, fees associated with a number of active hits, fees associated with the amount of displays, or any other dynamic or static criteria often determined by contract provisions. Further, the techniques of method 1100 may supplement the techniques of method 1000 to locate additional advertising or generate additional revenue. Method 1100 begins at step 1102, where application 130 preferably locates and processes the advertising history of the particular user and/or his business to identify similar scenarios and advantageously enhance the secondary content to be presented. This history may include a variety of possible data, such as advertising data previously selected by the user and/or business, identification data e.g. of providers 106 previously selected and/or approved by the user and/or business, and/or any other secondary content history data that may help target the advertising presented. For example, the user selections may include purchase data, selected and/or invoked links, and/or any other input or selections made by the user or users as appropriate.

Based on this identified history data, application 130 may determine sponsored content integrated into and/or tightly-coupled with the respective module and/or business process at step 1104. At step 1106, application 130 may then communicate this identified contextual information data to a local and/or remote third party, such as the entity hosting the particular module. Once processed, then application 130 may receive additional sponsored content data from this third party at step 1108. Regardless of the particular technique for gathering sponsored content data, application 130 preferably sorts the sponsored content data using any suitable parameters at step 1110. For example, application 130 may determine that some content data is more appropriate for the user, business and/or process. In an alternative or complementary example, application 130 may determine the level of revenue or cost associated to help determine the prioritization. At step 1112, application 130 then preferably presents at least a subset of the sponsored secondary content data to the user via GUI 136. Next, the providers 106 associated with the selected sponsored content preferably are billed at step 1114 as described in more detail above in respect to step 1016. Also, while not illustrated, application 130 may further store or append the additional content, as well as user actions involving such content data, to the user and/or business history for subsequent access and/or processing.

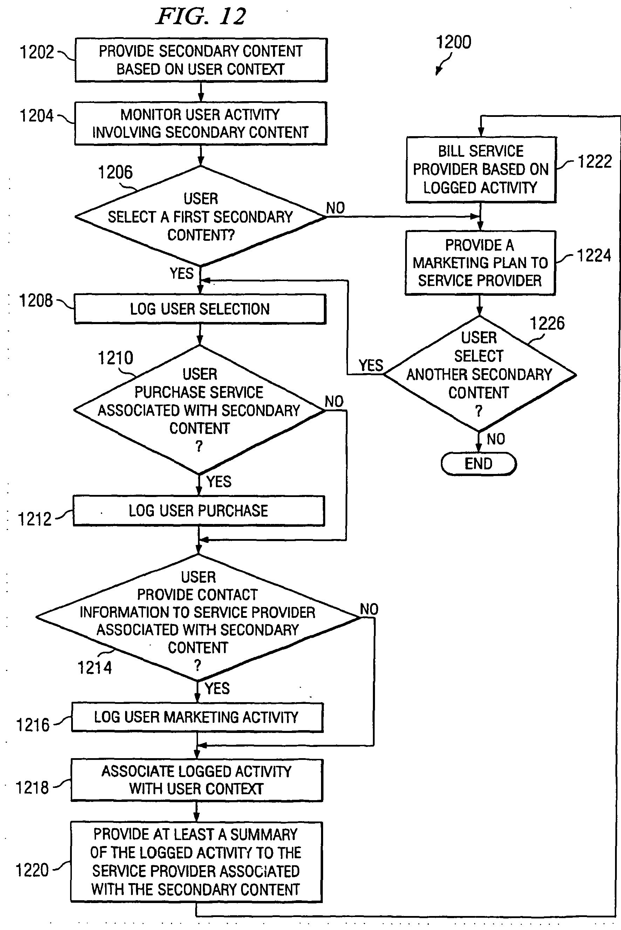

**FIGURE 12** is a flowchart illustrating an example method 1200 for managing feedback of service providers and/or users. Method 1200 generally involves application 130 preferably for monitoring user activity of secondary content for billing and feedback purposes. Illustrated method 1200 begins at step 1202 wherein secondary content data, such as advertising data, is provided to the user or business based on user context. Once this secondary content data is provided by interface 136, then application 130 preferably monitors user activity involving the secondary content data. For example, if the user selects a first secondary content data as shown by decisional step 1206, then this activity is preferably logged at step 1208. Generally, application 130 may log this activity by maintaining a run-time list, e.g. as a content of a database, in internal memory or data structures, creating an audit trail, storing the particular activity in a text file, or using any other appropriate technique or structure. Next, application 130 may determine if the selected a service data, in particular, if the user purchased a service (or good) associated with the secondary content data at decisional step 1210. For example, application 130 may determine that the secondary content data is associated with a first service data, but the user selected a second service data, in particular the user purchased or requested a second service by the same service provider 106. In this example (and perhaps according to certain contractual provisions), application 130 may log this activity for subsequent feedback as illustrated at step 1212. Regardless of a purchase, application 130 may also monitor for marketing activity by the user. For example, application 130 may determine that the user (or business 104) provided contact data or follow-up data or information to the service provider 106 associated with the secondary content data at decisional step 1214. Such example user marketing activity may also be logged at step 1216.

Once (or concurrently with) the various secondary activity of the user has been suitably logged, then application 130 may associate this activity with at least a portion of the user context at step 1218. It will be understood, that application 130 may attempt to preserve the privacy of the particular user or business and may instead monitor, log, and provide only generic (or non-specific) data or information such as business type data, business size data, revenue data, and such. Next, at step 1220, application 130 preferably provides at least a summary of the logged activity to the service provider 106 associated with the secondary content data. For example, application 130 may merely provide numeric data or any other suitable data, such as a count of successful clicks, browse time, or other information deemed useful for marketing or feedback purposes. In some cases, a bill may then be transmitted to the service provider as described in earlier figures. Based on the successful (or unsuccessful) secondary content data, application 130 may develop and/or provide further data, such as marketing plan data to the particular service provider 106, thereby potentially enhancing future advertising efforts or increasing revenue. If the user selects another secondary provider at decisional step 1226, then processing returns to step 1208 and this subsequent user activity is also monitored as described above.

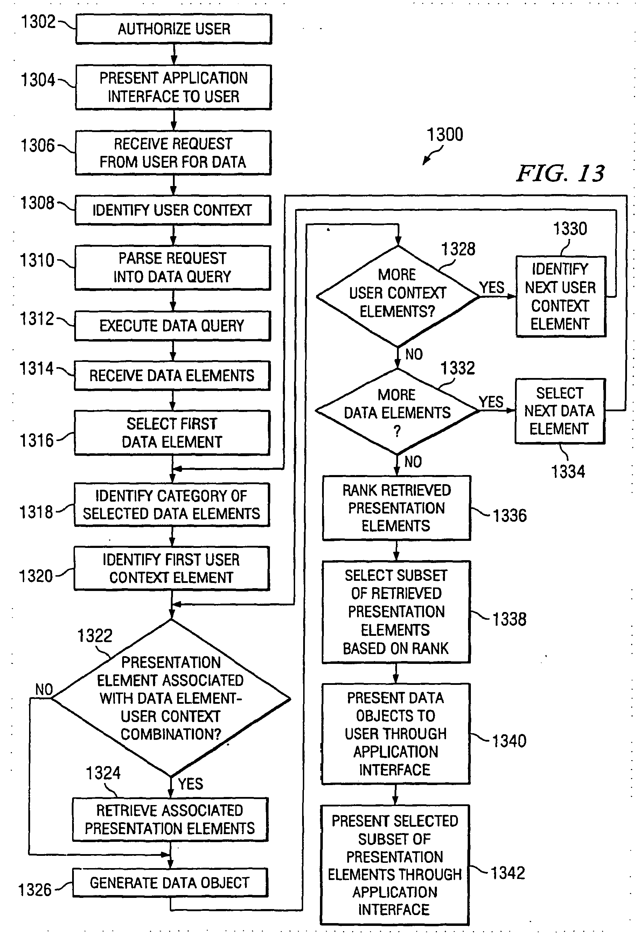

**FIGURE 13** illustrates an example method 1300 for dynamically presenting elements based on user context in accordance with one preferred embodiment of the present invention. At a high level, method 1300 preferably includes receiving a request 150 for data from a user and preferably automatically identifying a user context/user context data of the user. A plurality of data objects 155 is then preferably generated based on data elements retrieved in response to the request 156 from the user, with each data object comprising at least the respective data element and a class of the particular data element. At least, preferably a portion of the plurality of data objects is presented, with at least a portion of each data object being visible. A first presentation element 140 is also presented, with the first presentation element 140 selected based on at least a first of the plurality of data objects 155 and the identified user context.

Method 1300 begins at step 1302, where a particular user preferably is authorized to access or otherwise use system 100. For example, this authorization may include a login through client 104's operating system that is passed along to server 102, a direct login to server 102, a login to network 112 through a web interface or tunnel, or any other appropriate authentication or verification technique. Next, application 132 preferably presents an application interface 136 to the user at step 1304, perhaps via an interface similar to GUI 136a. At step 1306, application 132 receives a request 150 from the user for data. Application 132 preferably identifies a user context of the particular user at step 1308. For example, application 132 may determine certain identifying characteristics, i.e. characteristic identification data of the particular user from client 104, request 150, or information gathered during the authorization process. Based on this or any other suitable data, application 132 then preferably identifies or generates context data (also referred to as context) of the user using, for example, a user context profile 145 stored in memory 120. The user context profile 145 can be any suitable data structure. But, as described above, application 132 may dynamically determine the user context based on run-time algorithms and data without referencing or substantially processing such static structures.

Once request 150 is received, application 132 then preferably parses request 150 into a data query 114 at step 1310. This data query 114 may be a SQL query, a Java object or method, or any other appropriate request or command for data elements 116 through any suitable interface such as ODBC (Open DataBase Connectivity) or JDBC (Java Database Connectivity). Next, at step 1312, application 132 preferably executes the generated data query 114. Based on this query, application 132 preferably retrieves or otherwise receives certain data elements 116 at step 1314. As described above, application 132 may retrieve requested data elements from one or more locations such as local portion of memory 120 and distributed portion of repository 135. In this case, application 132 may execute multiple queries 114 across these locations and bundle the results upon receipt. Once the appropriate data elements 116 have been gathered and the user context 145 identified, application 132 then preferably prepares to present an updated application interface 136 to the user.

At step 1316, application 132 preferably selects a first data element 116 from the plurality of collected data elements 116. At step 1318, application 132 preferably identifies a class, category, or other metadata of the selected data element 116. One category may be the data table storing or referencing the particular element 116, an algorithmic description of the particular data element 160, or any other suitable descriptor or metadata that helps categorize at least a subset of the received data elements 160. For example, the transaction data may be invoice line data such as item, price per unit, ship date, ship to location, and bill to information. In this example, the transaction data may be associated with other attributes and metadata such as audit information, information location, table name (data), time entry (data) of the respective invoice, quality assurance data, and other customer relation pointers and/or data. Some data elements 116 may already include attribute and content metadata information. If the particular data element 116 has no associated metadata, then the data retrieval component (or other similar software or process) may examine the content of data element 116 to generate metadata accordingly. Indeed, even if some information, such as attribute or table information (data) or content metadata, is included with data element 116, further metadata may be determined or generated to enhance data object 155. At step 1320, application 132 preferably identifies a first user context element or data from the identified user context 145. As mentioned above, each user context element may be any piece of data that helps describe the user context, including projects, associated role or department, industry, and others. Using the identified data, application 132 then preferably determines if there are one or more presentation elements 140 associated with the particular combination of data element 116 in the user context element as shown at decisional step 1322. If there are one or more particular presentation elements 140 associated with the particular combination, then application 132 retrieves or otherwise collects such associated presentation elements 140 at step 1324. Regardless of the processing of presentation elements 140, application 132 then generates or instantiates a data object 155 based on the particular data element 116 ay step 1326. Generally, data object 155 preferably comprises any bundling, encapsulation, instantiation, interface, or other association of the particular data element 116 and other attribute and content metadata information. For example data object 155 may comprise a Java object that includes the transaction data stored or referenced in data element 116, the particular table or file that stores the element 116, a category or other data type of the element 116, and any number of other parameters or variables. Next, application 132 then preferably determines if there are more user context elements within the identified user context 145 at decisional step 1328. If there are, then application 132 identifies the next user context element at step 1330 and processing preferably returns to step 1322, where application 132 preferably identifies additional presentation elements 140 that may be associated with this particular data element 116. Once there are no more user context elements to process for this particular data element 116, then application 132 preferably determines if there more data elements 116, retrieved or received at step 1314, as illustrated at decisional step 1332. If there are more data elements 116, then application 132 preferably selects the next data element 116 at step 1334 and processing preferably returns to step 1318, where application 132 attempts to identify or process the one or more combinations of the new data element 116 and the identified user context 145.

Once the various combinations of data elements 116 and the particular user context 145 have been identified and processed, application 132 then preferably ranks or sorts the retrieved presentation elements 140 at step 1336. Next, application 132 preferably selects a least a subset of the retrieved presentation elements 140 based on the rank, priority, or other sorting criteria at step 1338. At step 1340, application 132 then preferably presents at least a subset of the generated data objects 155 through application interface 136. Of course, in certain circumstances, application 132 may only display certain transaction data 202 or other visible portions of the particular data object 155. Application 132 preferably also presents the selected subset of presentation elements 140 via the application interface 136 at step 1342.

The preceding flowchart and accompanying description illustrate exemplary methods, 400-1300. System 100 preferably contemplates using or implementing any suitable technique for performing these and other tasks. It will be understood that these methods are for illustration purposes only and that the described or similar techniques may be performed at any appropriate time, including concurrently, individually, or in combination. For example, a procedure similar to method 1300 may obtain or identify the context of the user during the login or authorization process and then dynamically poll client 104 to update certain elements of the user's context. In another example, a procedure similar to method 1300 may instead determine a requested class or category of data elements 116 upon receiving the request 150 and, therefore, may not process elements 116 individually. In yet another example, the procedure may determine the class of data at the time of the request 150 and may determine further combinations of data and user context based on the transaction data of one or more of the individual data elements 116. In addition, many of the steps in this flowchart may take place simultaneously and/or in different orders than as shown. Moreover, system 100 may use methods with additional steps, fewer steps, and/or different steps, so long as the methods remain appropriate. For example, if there are a limited amount of identified presentation elements 140, such that the identified elements 140 may fit on the user's screen, then application 132 may not sort or rank the presentation elements 140 to identify a subset to be displayed.

Although this disclosure has been described in terms of certain embodiments and generally associated methods, alterations and permutations of these embodiments and methods will be apparent to those skilled in the art. For example, certain embodiments of system 100 may be a standalone, but networked, computer that retrieves local information, identifies the context of the local user, and provides presentation elements associated with remote objects, applications, or other data accessible via the network. Accordingly, the above description of example embodiments does not define or constrain this disclosure. Other changes, substitutions, and alterations are also possible without departing from the spirit and scope of this disclosure.

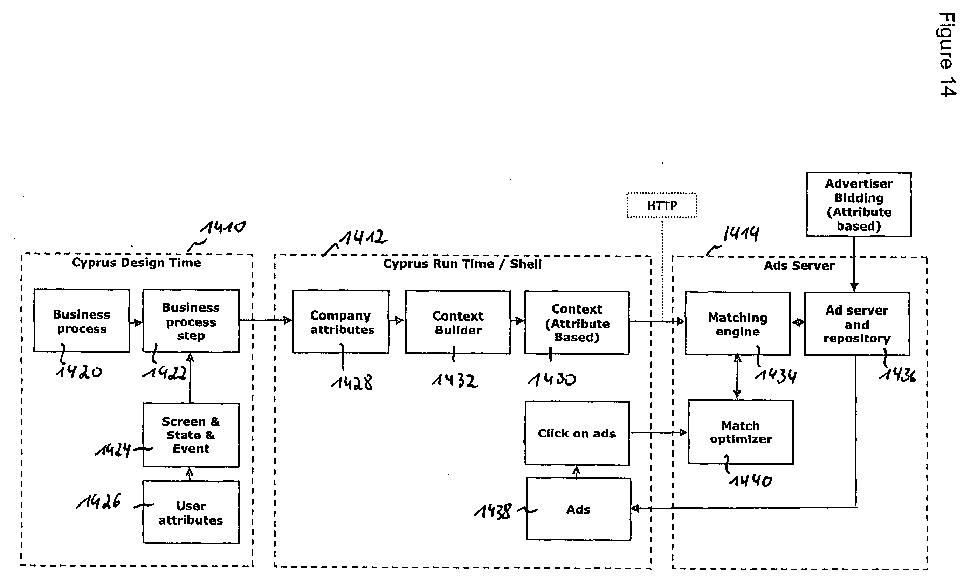

**Figure 14** shows a schematic overview of a method according to a preferred variant of the invention. In figure 14, there are provided three different instances: On the left side, there is shown the design time instance 1410, in the middle, there is shown the run time instance 1412 also referred to as shell 1412 and on the right side, there is shown the ads server instance 1414. The shell 1412 can comprise a GUI (not shown) or represent a GUI.

In the design time instance 1410, when starting and/or carrying out a business process 1420, a business process step 1422 is provided and, if suitable, a respective GUI can be shown on a screen. In particular, attribute data, also referred to as attributes, can be defined in step 1424. Alternatively, the attributes can be defined globally and can be provided with respect to business process step 1422. The attributes can be defined and/or provided before, during or after the business process step 1422.

The attributes can be included ad/or be provided in different levels. The first level typically represents or relates to the company that is using or carrying out the business process. Hence, one specific attribute or attribute data preferably relates to the company or business carrying out the business process. Such attribute data can be and/or include the business filed of the company, products or services provided by the company, number of employees, the name of the company etc. The next level in the hierarchy of levels can represent and/or relate to the user carrying out the business process. The user typically is an employee e.g. carrying out the business process in behalf of the (higher level) company. Hence, data of the user can represent one or more further attributes, such as position of the user in the company, typical assignment of the user in the company, business partners of the user, etc.

According to a next level, further attributes can be business process attributes, i.e. attributes directly relating to the business process currently carried out. In other words, any information data of business process 1420 can be used and/or be provided as attribute. Additionally, as a next level, business process step attributes can be created and/or provided e.g. from a database.

Further to that, in a next level, attributes may preferably relate to data on the display. In other words, such attributes can relate to data on a screen, e.g. data that the user is currently generating and/or receiving and/or reading and/or manipulating. Further to that, said attribute data preferably describes a state of the user and/or an event, the user performs or is involved in. In particular attribute data of the user is created and/or provided e.g. from the position of the user in the company, the function of the user in the company, etc.

Furthermore, in figure 14, the company attributes 1428 are provided from said design time instance 1410 to said run time instance 1412. The run time instance 1412 is adapted to provide a context 1430 based on the attributes. Therefore, said run time instance 1412 uses a context builder 1432. In other words, said run time instance 1412, also referred to as application runtime shell, preferably builds said context based on the collection of attributes. Next, said context 1430 is transferred to said ads server instance 1414, e.g. using an http protocol. Said ads server instance 1414 included a matching engine 1434. Said matching engine 1434 translates results of the matching engine 1434 into a request to said ads server 1414. In particular a request to an ad server and repository 1436 is provided. Said ad server 1414 sends the ads to the application runtime 1412 where the ads 1438 are then displayed e.g. in a GUI.

If the user then selects on one or more of said ads 1438, e.g. by clocking on it/them, the respective ads 1438 are audited in a match optimizer 1440 which helps the matching engine 1434 to better match the ads to the attributes of said context 1430. Advantageously, an advertiser is bidding against business attributes and not just simple keywords. However, the matching engine can be of any kind. Therefore, it is also possible, that the matching engine works comparable with a conventional search using keywords. In particular, the matching engine can be any conventional search engine.

Preferably, the method provides a GUI screen with business process step and vendor information relevant to the step.

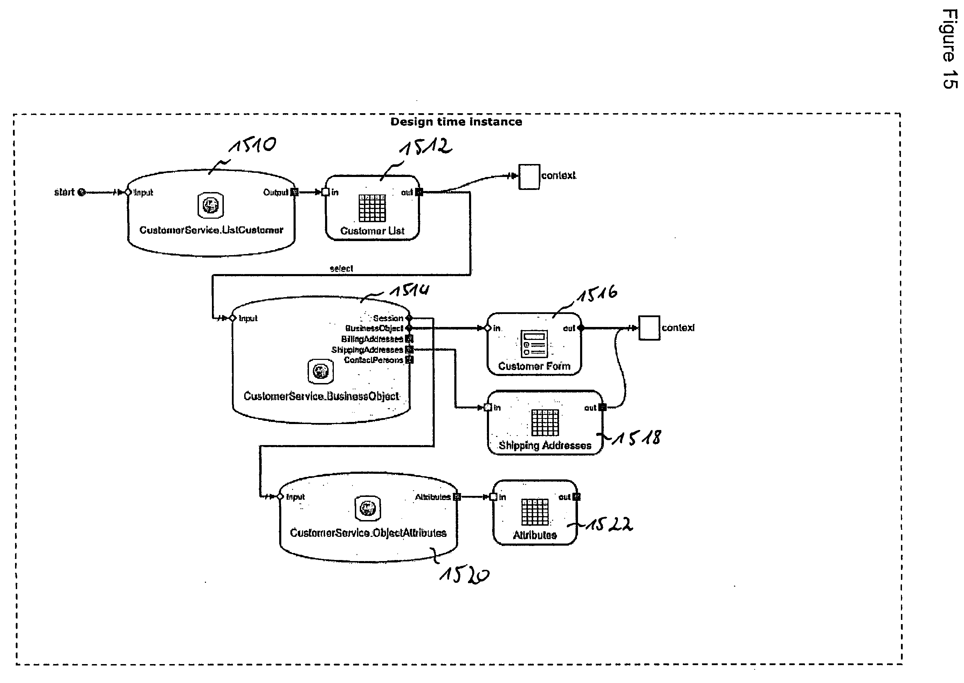

An exemplary flow diagram showing operations carried by said design time instance is shown in **figure 15**. In particular, figure 15 also shows exemplary possible GUIs to be presented to a user, in order to create and/or specify and/or provide the attributes. In step 1510 a user enters a customer list. Therefore, in step 1512, a customer list is displayed in a GUI on a screen. Also, entries of the customer list 1512 and/or changes of the customer list 1512, are provided for creation of the context 1430.

Next, the user is provided with a GUI showing a business object 1514. The business object 1514 preferably allows to open further windows in the business object 1514 and/or to provide additional GUIs. Such additional GUIs may be "Session", "Business Object", "Billing Addresses", "Shipping Addresses" and/or "Contact Person". As an example, an interface 1516, in particular a GUI 1516 may be provided when the user selects "Business Object". The "Business object" interface 1516 preferably allows the user to verify and/or change the details of a specific customer, such as name, contact address, billing information, etc.

Further to that in Figure 15 an exemplary interface or GUI 1518 is shown, which will be displayed, when the user selects "Shipping Addresses". Similar to the "Business object" interface 1516, the "Shipping Addresses" GUI 1518 allows to provide, in particular automatically provides data for the creation of the context 1430. Therefore, any change to and/or input via the "Shipping Addresses" GUI 1518, preferably automatically is considered, when creating the context 1430.

In case the user selects session in "Business Object" GUI 1514, an "Objects Attributes" GUI 1520 is displayed. The "Business Object" GUI 1514 allows the user to manually select (further) attribute data using an "Attributes" GUI 1522. In particular, with the "Attributes" GUI 1522, the user may manually select and/or deselect one or more attributes, which then are used for ceating the context 1430.

In other words, the developer can define entry points and triggers to activate the context package and the usage of the attributes in the context package.

In particular, figure 15 shows an example of a visual model of a user interface which shows a customer list and customer details in the customer management business process.

According to said shown preferred embodiment, the developer added an event to every change in the customer list or customer details form. Said event is preferably used automatically for creation of the context 1430.

In Addition, the user and/or the developer can manually define which attributes will be used and how, when building the context package that will be sent to the ad server 1414.

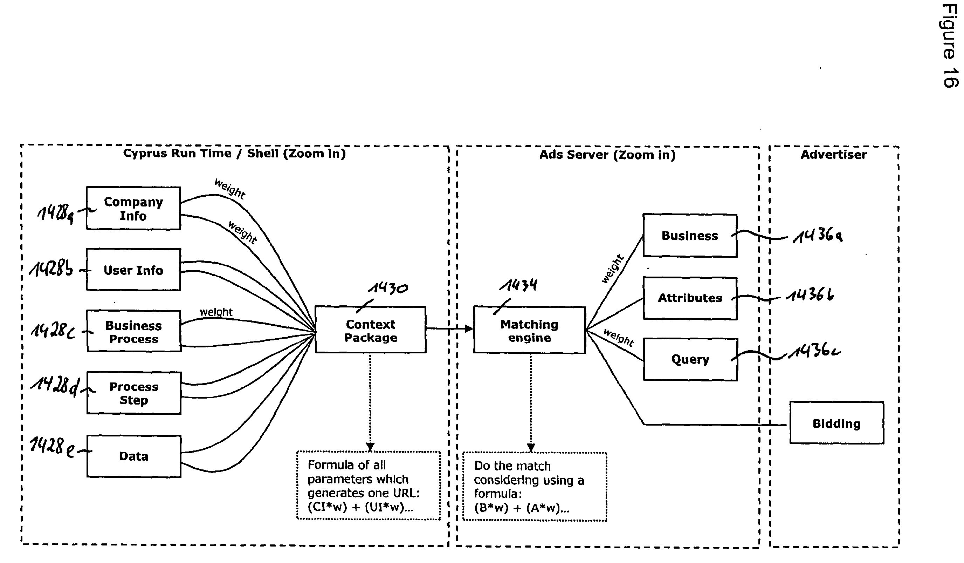

**Figure 16** shows a more detailed description of the run time instance 1412 and the ads server instance 1414. In particular, figure 16 shows five exemplary attributes, namely a company info attribute 1428a, a user info attribute 1428b, a business process attribute 1428c, a process step attribute 1428d and a data attribute 1428e. Said attributes 1428a - 1428e are used for generating said context 1430, here also referred to as "context package" 1430. Also, said attributes 1428a - 1428e may represent said different levels, as described above. The context 1430 is created from the attributes 1428a - 1428e e.g. by a weighted summation of the attributes 1428a - 1428e such that said context package 1430 is equal to the sum: $\sum_i A_i * w_i$, wherein $A_i$ represents the attribute, such as the "Company Information" attribute 1428a, the "User Information" attribute 1428b, etc. The parameter $w_i$ represents the weight with which each attribute enters into the sum. The weight may be any number, in particular, the weights may be such, that the entire sum is e.g. normalized to a specified value, in particular to unity = 1.

In other words, said context package 1430 is created from a collection of business attributes 1428a - 1428e and their weight $w_i$. For example, the business can be a small business in the New York area, e.g. in the textile industry (which then is used as company info attribute 1428a), the user is male of age 46 years (which then is used as user info attribute 1428b), he is working on the customer management businesses process (which then is used as the business process attribute 1428c and the process step attribute 1428d) and he is inserting a customer activity on delayed payment (which then is used as the data attribute 1428e). Using said attributes, the "context package" 1430 is created.

Said "context package" 1430 is sent to said matching engine 1434 for matching the best ads based on business attributes. In particular, said matching engine 1434 is adapted to compare the "context package" 1430 with information particularly from the repository 1436. In said repository 1436, e.g. business information 1436a, a list of attributes 1436b, any further query information 1436c, etc. are provided. The matching engine 1434 preferably provides adverts (ads) based on the results of the comparison of the input information 1436a - 1436c with said provided "context package" 1430. In order to compare said input information 1436a - 1436c with said provided "context package" 1430, the input information 1436a - 1436c preferably is weighted using weights $w_i$. As an example, the input information may be added to a sum according to $\sum_i I_i * w_i$, wherein $I_i$ represents the respective elements of the input information 1436a - 1436c. The parameter $w_i$ represents a weight. Accordingly, the adverts to be displayed e.g. in a GUI are chosen from a repository using the matching engine 1434 by comparison of the "context package" 1430 with the weighted input information 1436a - 1436c.

Hence, vendors and/or advertisers and/or other suppliers preferably are exposed to key business processes. Vendor information, such as advertisements, bidding, reverse auction, etc. are presented in said business process application. Hence, it is possible that vendor information may be relevant to or otherwise selected based on a current step in the business process.

In other words, the advertisers, bid against a collection of business attributes according to their choice.

This ensures targeting the exact customers he wants to. For example, an advertiser is a collection agency located in New York. Said advertiser can bid as follows: Advertise a particular advert for customers located in the New York area, in the low tech industry, in the customer management or payment management business process were the data contains aging information.

Preferably, the above described method can be applied to advertisements as well as to any other content based on business information, such as business process step, business role, company profile, user profile, user history, Application Business process step, application UI, application data, user actions and/or business metrics, etc. In particular, the method is not limited to business process applications. Rather, said method applies to any business or other application.

Advantageously, it is possible to predict subsequent business process step(s) and dynamically provide targeted advertising or other relevant content to user at that step.

Further to that, business process associations, also referred to as triggers, for advertisements or other content preferably can be stored.

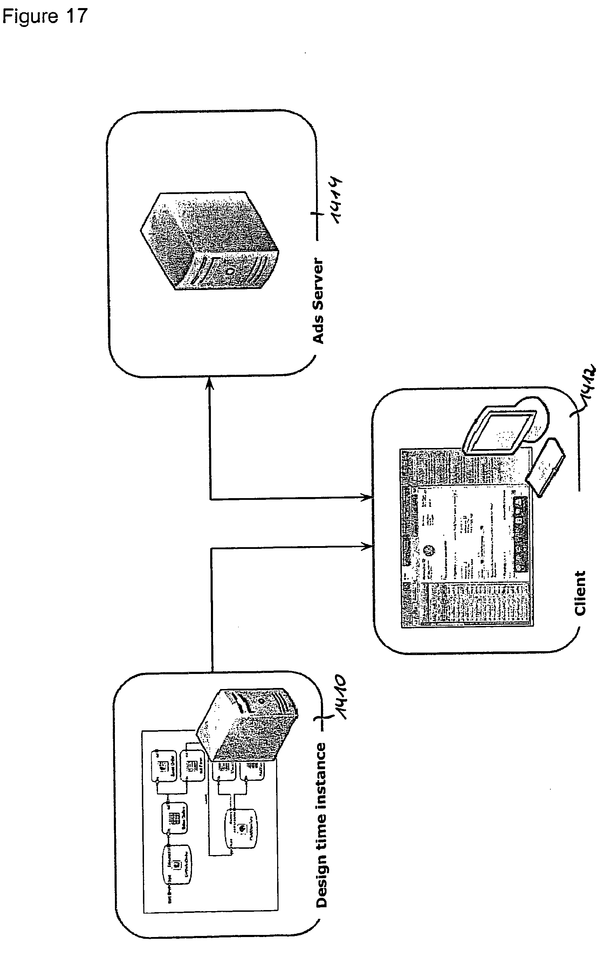

**Figure 17** shows a schematic overview of an implementation comprising a preferred computer system. In particular, figure 17 shows a design time instance 1410, a run time instance 1412, also referred to as a client and a preferred ads server 1414. The design time instance 1410 is adapted to be in data communication with the client 1412. The client is adapted to be in data communication with the ads server 1414. On the client 1412, there is installed a system management environment and/or application according to a preferred embodiment of the present invention. Therefore, the application can recognize and/or collect attributes of the user running the application (or the system management environment). Said attributes are used to provide further information from the ads server 1414 to the client 1412. Also, the client 1412 can exchange data between the client 1412 and the design time instance 1410, e.g. which attributes were forwarded to the ads server 1414 and which ads were provided from the ads server 1414 to the client 1412. Also, there can be any further data exchange between the ads server 1414 and/or the client 1412 and/or the design time instance 1410, e.g. whether the user used a specific ad and bought a service and/or product through said ad. In particular, the application can be such that the application allows the user to manage the system environment and/or contact third person providers, e.g. the providers of the ads, in order to purchase goods and/or products.

With reference to **figure 18**, an exemplary system for implementing the process control system includes a computing environment 220 (e.g., personal computer), including a processing unit 222, a system memory 224, and a system bus 226, that couples various system components including the system memory 224 to the processing unit 222. The processing unit 222 may perform arithmetic, logic and/or control operations by accessing system memory 224. The system memory 224 may store information and/or instructions for use in combination with processing unit 222. The system memory 224 may include volatile and non-volatile memory, such as random access memory (RAM) 228 and read only memory (ROM) 230. A basic input/output system (BIOS) containing the basic routines that helps to transfer information between elements within the personal computer 220, such as during start-up, may be stored in ROM 230. The system bus 226 may be any of several types of bus structures including a memory bus or memory controller, a peripheral bus, and a local bus using any of a variety of bus architectures.

The personal computer 220 may further include a hard disk drive 232 for reading from and writing to a hard disk (not shown), and an external disk drive 234 for reading from or writing to a removable disk 236. The removable disk may be a magnetic disk for a magnetic disk driver or an optical disk such as a CD ROM for an optical disk drive. The hard disk drive 234 and external disk drive 234 are connected to the system bus 226 by a hard disk drive interface 238 and an external disk drive interface 240, respectively. The drives and their associated computer-readable media provide non-volatile storage of computer readable instructions, data structures, program modules and other data for the personal computer 220. The data structures may include relevant data of the implementation of the method for controlling and/or monitoring, as described in more details above. The relevant data may be organized in a database, for example a relational or object database.

Although the exemplary environment described herein employs a hard disk (not shown) and an external disk 242, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk 242, ROM 230 or RAM 228, including an operating system (not shown), one or more application programs 244, other program modules (not shown), and program data 246. The application programs may include at least a part of the functionality as detailed in Figs. 2 to 22.

A user may enter commands and information, as discussed below, into the personal computer 220 through input devices such as keyboard 248 and mouse 250. Other input devices (not shown) may include a microphone (or other sensors), joystick, game pad, scanner, or the like. These and other input devices may be connected to the processing unit 222 through a serial port interface 252 that is coupled to the system bus 226, or may be collected by other interfaces, such as a parallel port interface 254, game port or a universal serial bus (USB). Further, information may be printed using printer 256. The printer 256, and other parallel input/output devices may be connected to the processing unit 222 through parallel port interface 254. A monitor 258 or other type of display device is also connected to the system bus 226 via an interface, such as a video input/output 260. In addition to the monitor, computing environment 220 may include other peripheral output devices (not shown), such as speakers or other audible output.

The computing environment 220 may communicate with other electronic devices such as a computer, telephone (wired or wireless), personal digital assistant, television, or the like. To communicate, the computer environment 220 may operate in a networked environment using connections to one or more electronic devices. Figure 18 depicts the computer environment networked with remote computer 262. The remote computer 262 may be another computing environment such as a server, a router, a network PC, a peer device or other common network node, and may include many or all of the elements described above relative to the computing environment 220. The logical connections depicted in figure 18 include a local area network (LAN) 264 and a wide area network (WAN) 266. Such networking environments are commonplace in offices, enterprise-wide computer networks, intranets and the Internet.

When used in a LAN networking environment, the computing environment 220 may be connected to the LAN 264 through a network I/O 268. When used in a WAN networking environment, the computing environment 220 may include a modem 270 or other means for establishing communications over the WAN 266. The modem 270, which may be internal or external to computing environment 220, is connected to the system bus 226 via the serial port interface 252. In a networked environment, program modules depicted relative to the computing environment 220, or portions thereof, may be stored in a remote memory storage device resident on or accessible to remote computer 262. Furthermore other data relevant to the application of the insurance claim management evaluation method (described in more detail further below) may be resident on or accessible via the remote computer 262. The data may be stored for example in an object or a relation database. It will be appreciated that the network connections shown are exemplary and other means of establishing a communications link between the electronic devices may be used.

It should be emphasized that the present invention is not limited to the above described aspects and embodiments. Rather, advertisements or other content for presentment to a user can be selected and optimized on business process activity of user.

Further to that, advertising campaigns can be offered to media planners, advertisers and companies based on business process. As an example, a telecommunications company can be offered an ad campaign to advertise when user pays e.g. a phone bill each month.

Furthermore, context (also referred to as "secondary content") can be built with any piece of inherent information, such as company profile, user profile, user history, application business process step, application user information (UI), application data and user actions. The present method, preferably running on a conventional standard SAP system and/or using a conventional standard SAP system uses all the above data or any combination of it to build the context.

**Claims**

1. A computerized method for dynamically presenting elements based on business context, comprising:

   receiving (1306) a request for data (150) from a user (108);
   identifying (1308) a business context (145) of the user (108);
   generating (1326) a plurality of data objects based on data elements (116) retrieved (1324) in response to the request (150) from the user (108), each data object comprising at least the respective data element and a class of the particular data element (116);
   presenting (1340) at least a portion of the plurality of data objects (155), with at least a portion of each data object (155) being visible; and
   presenting (1342) a first presentation element (140), with the first presentation element (140) selected based on at least a first of the plurality of data objects (155) and the identified business context.

2. Method according to claim 1, wherein the business context of the user is determined by identifying attribute data, wherein the attribute data comprises characteristic information data from a client (104) and/or said request (150) and/or from information gathered during the authorization process.

3. Method according to claim 2, wherein a user context data (145) is identified and/or generated from said business context.

4. Method according to any one of the preceding claims, wherein the method is carried out within a common application, in particular within a common system management environment.

5. Method according to anyone of the preceding claims wherein the user context data (145) is determined dynamically, based on run-time algorithms and data, in particular attribute data.

6. Method according to claim 5, wherein the user context data (145) is determined with little, preferably without referencing or substantially processing static structures.

7. Method according to claim 6, wherein request (150) is parsed into a data query (114), preferably a SQL query, a Java object

8. Method according to any one of the preceding claims, wherein said requested data elements are retrieved from one or more locations, in particular a local portion of memory (120) and/or a distributed portion of repository (135).

9. Method according to claim 8, wherein multiple queries (114) are executed across said locations and wherein the results are bundled upon receipt.

10. Method according any one of the preceding claims, wherein an updated application interface (136) is presented to said user.

11. Method according to any one of the preceding claims, wherein at least a first data element (116) is selected from said plurality of data elements (116) and wherein a class and/or a category and/or other metadata of said selected data element (116) are identified.

12. Method according to claim 11, wherein said category is a data table storing and/or referencing said particular element (116) and/or an algorithmic description of the particular data element (160) and/or a descriptor and/or metadata

13. Method according to claim 12, wherein a first user context element and/or data is identified from said identified user context (145).

14. Method according to claim 13, wherein said identified data, is used to determine if there are one or more presentation elements (140) associated with the particular combination of said data element (116) in the user context element

15. Method according to anyone of the preceding claims, wherein a data object (155) is generated and/or instantiated based on said particular data element (116).

16. Method according to claim 15, wherein data object (155) comprises any bundling, encapsulation, instantiation, interface, and/or other association of said particular data element (116).

17. Method according to claim 16, wherein data object (155) comprises a Java object that includes the transaction data stored or referenced in data element (116) and/or the particular table and/or file that stores the element (116), and/or a category.

18. Method according to claim 17, wherein there is determined if there are more user context elements within the identified user context (145) and, if there are, there a next user context element is identified and additional presentation elements (140) that are associated with this particular data element (116) are determined.

19. Method according to claim 18, wherein once there are no more user context elements to process for said particular data element (116), there is determined if there more data elements (116) and if there are more data elements (116), then application (132) preferably selects the next data element (116) one or more combinations of said new data element (116) and said identified user context (145) are identified and/or processed.

20. Method according to claim 19, wherein once said various combinations of data elements (116) and the particular user context (145) have been identified and processed said retrieved presentation elements (140) are ranked and/or sorted and a least a subset of said retrieved presentation elements (140) are selected based on the rank and/or priority and at least a subset of said generated data objects (155) are presented through application interface (136).

21. Method according to claim 20, wherein said selected subset of presentation elements (140) are presented via said application interface (136).

22. Method, preferably according to one of the preceding claims, for providing sponsored content for use with a computer application, comprising:

   obtaining a business context for a user of a computer application; and
   using the business context to provide sponsored content for use with the computer application.

23. Method according to any one of the preceding claims, wherein the business context comprises a current usage context in a business application.

24. Method of Claim 23, wherein the current usage context comprises data from a transaction screen and/or a presentation screen in the business application.

25. Computer program product, which when loaded and stored in the memory of a computer carries out the method according to one of the preceding claims.

26. Computer system for dynamically presenting elements based on business context, comprising:

   a receiving device adapted for receiving a request for data from a user;

an identification device adapted for identifying a business context of the user;

data processing device adapted for generating a plurality of data objects based on data elements retrieved in response to the request from the user, each data object comprising at least the respective data element and a class of the particular data element;

a data presenting device, such as a display, which is adapted for presenting at least a portion of the plurality of data objects, with at least a portion of each data object being visible; and wherein said data presenting device is further adapted for

presenting a first presentation element, with the first presentation element selected based on at least a first of the plurality of data objects and the identified business context.

## FIG. 1

*FIG. 2*

130

*FIG. 3*

XML      APIs      ODBC

132

INTERFACES

XML ADAPTER

API (COM)

EXECUTIVE/PAYROLL

E-COMMERCE MODULE

MANUFACTURING

SERVICES

CENTRALIZED DATABASE

FINANCE

SALES

SQL SERVER

SERVICES

E-MAIL

BACKUP

SOAP

WEB SERVICE

EP 1 811 441 A1

400

402 — PRESENT INTRODUCTION PAGE TO USER

404

IS USER REGISTERED WITH APPLICATION ?

YES

NO

410 — PRESENT FOUR-STEP REGISTRATION PAGE

406 — PRESENT USER SIGN-ON PAGE

412 — PROCESS AND VERIFY RECEIVED USER INFORMATION

GRANT ACCESS TO APPLICATION UPON AUTHENTICATION

408

414 — PROCESS AND VERIFY RECEIVED SIGN-IN INFORMATION

416 — PROCESS AND VERIFY RECEIVED BUSINESS INFORMATION

418 — PROCESS AND VERIFY RECEIVED BUSINESS PROFILE

420 — STORE BUSINESS AND USER INFORMATION

MORE DATA NEEDED ?

NO

END

422

YES

424 — PERFORM ROLLING REGISTRATION

*FIG. 4*

## FIG. 5A

136a

email address

password

Sign In

Register Now

## FIG. 5B

136b

### 4 Step Registration

| | |
|---|---|
| 1 Registrant Information<br>  Name, email address, and role | Done |
| 2 | |
| 3 | |
| 4 | |

## FIG. 5C

136c

**4 Step Registration**

| ✓ 1 | |
|---|---|
| **Sign In Information**<br>2  Account password (with verification re-entry), password hint, and personal<br>identification information (birthplace, mother's maiden name, name of first pet) | Done |
| 3 | |
| 4 | |

## FIG. 5D

136d

**4 Step Registration**

| ✓ 1 | |
|---|---|
| ✓ 2 | |
| **Business Information**<br>3  Official business name, public business name, business phone number,<br>and business address | Done |
| 4 | |

*FIG. 5E*

136e

**4 Step Registration**

| ✓ 1 | |
| ✓ 2 | |
| ✓ 3 | |
| 4  Business Profile<br>Number of employees, annual revenue, NAICS business classification code | Done |

*FIG. 6*

600

602 — IDENTIFY A FIRST USER CONTEXT COMBINATION

604 — ASSIGN A WEIGHT TO THE IDENTIFIED COMBINATION

606 MORE USER CONTEXT COMBINATIONS ? — YES → 608 IDENTIFY NEXT USER CONTEXT COMBINATION

NO

610 — COMMUNICATE COMBINATIONS TO MONETIZATION MODULE

612 — NORMALIZE USER CONTEXT COMBINATIONS

614 — PRIORITIZE COMBINATIONS

616 — IDENTIFY SECONDARY CONTENT BASED ON PRIORITIZED COMBINATIONS

618 — COLLECT SUBSET OF IDENTIFIED SECONDARY CONTENT

620 — PRESENT COLLECTED SECONDARY CONTENT TO USER

EP 1 811 441 A1

*FIG. 7A*

File  Edit  View  Go  Favorites  Help

**Main Menu**

| Modules | Drag & Relate | User Menu |

202a — 🗇 Administration

202b — ⊕ Financials

⟰ Sales Opportunities

🖑 Sales - A/R

🛒 Purchasing - A/P

🤝 Business Partners

💰 Banking

🗇🗇 Inventory

⚙⚙ Production

⬡ MRP

✳ Service

👤 Human Resources

📈 Reports

Overdue Debts

Customer Debts

File  Edit  View  Insert  Format  Tools

| Sales Document | | 1234 |
| Date | 1/1/05 | |

| Qty | Item | Price |
|-----|--------|---------|
| 2 | Engines | $15,000 |
| 3 | Seats | $1,000 |
| 4 | Wheels | $450 |

204

204

136f

**World Wide shipment services**

Search for shipment providers [ Search ]

FedEx®
Express

Compare price for shipment number
xxx (sort by delivery time)

| UPS | 50$ | 12hr | Select |
| FedEx | 40$ | 24hr | Select |
| FedEx | 35$ | 48hr | Select |
| NY shipper | 60$ | 24hr | Select |

Who.
Where.
What.
When.

UPS Internet
Shipping-History  [→]

Make FedEx one of
your service
providers
Click to make the
service available

Shipment services in NY-

FedEx 1
UPS
NY runner
NY

SAP Confidential!!

*FIG. 7B*

**FIG. 7C**

Window controls: File Edit View Insert Format Tools

**Main Menu**

Tabs: Modules | Drag & Relate | User Menu

- 202a — Administration
- 202b — Financials
- Sales Opportunities
- Sales - A/R
- Purchasing - A/P
- Business Partners
- Banking
- Inventory
- Production
- MRP
- Service
- Human Resources
- Reports
- Overdue Debts
- Customer Debts

| Sales Document | | 1234 |
|---|---|---|
| Date | 1/1/05 | |

| Qty | Item | Price |
|---|---|---|
| 2 | Engines | $15,000 — 204 |
| 3 | Seats | $1,000 |
| 4 — 204 | Wheels | $450 |

- Help — 140
- Shipping — 140
- Accounting — 140
- CRM — 140
- (pie chart) — 140
- (line graph) — 140

136g

EP 1 811 441 A1

*FIG. 7D*

Shopping!

## Search Shopping

| Sort by: Merchant | Merchant Rating | Price Overnight | Price 2-day | Price 3-day | Price Ground ▲ | Ship |
|---|---|---|---|---|---|---|
| UNITED STATES POSTAL SERVICE® | ★★★ | $ | $ | $ | $ | ▲ |
| FedEx® | ★★★★ | $ | $ | $ | $ | ▲ |
| INTLMOVERS | ★★ | $ | $ | $ | $ | ▲ |
| ups | ★★★★★ | $ | $ | $ | $ | ▲ |
| uShip | ★ | $ | $ | $ | $ | ▲ |

136h

DR.

## FIG. 8

802 — IDENTIFY A PLURALITY OF USER CONTEXT COMBINATIONS

804 — PARSE COMBINATIONS INTO CATEGORIES

806 — IDENTIFY FIRST CONTEXT CATEGORY

800

808 — SELECT A PLURALITY OF PROVIDERS BASED ON FIRST CATEGORY

810 — PRIORITIZE SELECTED PLURALITY OF PROVIDERS

812 — MORE CATEGORIES ? — YES — IDENTIFY NEXT CATEGORY — 814

NO

816 — BUNDLE PROVIDERS

818 — COMMUNICATE BUNDLE TO CLIENT FOR PRESENTATION

900

## FIG. 9

902 — INVOKE A CONTENT CENTER

904 — IDENTIFY A PLURALITY OF USER CONTEXT COMBINATIONS

906 — DETERMINE CONTENT CENTER SERVICE BASED ON COMBINATIONS

EMBED LINK TO SERVICE — 908

EXECUTE SERVICE — 910

GENERATE FORM — 912

PRESENT SUPPORT — 914

1000

## FIG. 10

1002 — IDENTIFY A PLURALITY OF USER CONTEXT COMBINATIONS

1004 — IDENTIFY THE HISTORY OF USER SELECTION IN SIMILAR BUSINESS PROCESSES

1006 — COMPARE IDENTIFIED INFORMATION TO INTEGRATED SPONSORED CONTENT

1008 — COMMUNICATE IDENTIFIED INFORMATION TO THIRD PARTY

1010 — RECEIVE ADDITIONAL SPONSORED CONTENT FROM THIRD PARTY

1012 — SORT SPONSORED CONTENT

1014 — PRESENT AT LEAST A SUBSET OF THE SORTED SPONSORED CONTENT

1016 — BILLING THE PROVIDER ASSOCIATED WITH THE PRESENTED CONTENT

1100

## FIG. 11

1102 — IDENTIFY ADVERTISING HISTORY OF USER OR BUSINESS

1104 — COMPARE IDENTIFIED INFORMATION TO INTEGRATED SPONSORED CONTENT

1106 — COMMUNICATE IDENTIFIED INFORMATION TO THIRD PARTY

1108 — RECEIVE ADDITIONAL SPONSORED CONTENT FROM THIRD PARTY

1110 — SORT SPONSORED CONTENT

1112 — PRESENT AT LEAST A SUBSET OF THE SORTED SPONSORED CONTENT

1114 — BILLING THE PROVIDER ASSOCIATED WITH THE PRESENTED CONTENT

## FIG. 19

| BUSINESS INFORMATION | USER | APPLICATION | ACTION | METADATA / DATA ENTRY | ⟹ | CONTEXT |

## FIG. 12

1200

```
1202 ── PROVIDE SECONDARY CONTENT
           BASED ON USER CONTEXT

1204 ── MONITOR USER ACTIVITY
           INVOLVING SECONDARY CONTENT

1206
        ◇ USER SELECT A FIRST SECONDARY CONTENT? ──NO──→

YES

1208 ── LOG USER SELECTION

1210
        ◇ USER PURCHASE SERVICE ASSOCIATED WITH SECONDARY CONTENT? ──NO──→

YES

1212 ── LOG USER PURCHASE

        ◇ USER PROVIDE CONTACT INFORMATION TO SERVICE PROVIDER ASSOCIATED WITH SECONDARY CONTENT? ──NO──→
1214

YES

1216 ── LOG USER MARKETING ACTIVITY

1218 ── ASSOCIATE LOGGED ACTIVITY WITH USER CONTEXT

1220 ── PROVIDE AT LEAST A SUMMARY OF THE LOGGED ACTIVITY TO THE SERVICE PROVIDER ASSOCIATED WITH THE SECONDARY CONTENT
```

```
BILL SERVICE PROVIDER BASED ON LOGGED ACTIVITY ── 1222

PROVIDE A MARKETING PLAN TO SERVICE PROVIDER ── 1224

1226
        ◇ USER SELECT ANOTHER SECONDARY CONTENT? ──YES──→

NO

( END )
```

1302 — AUTHORIZE USER

1304 — PRESENT APPLICATION INTERFACE TO USER

1306 — RECEIVE REQUEST FROM USER FOR DATA

1308 — IDENTIFY USER CONTEXT

1310 — PARSE REQUEST INTO DATA QUERY

1312 — EXECUTE DATA QUERY

1314 — RECEIVE DATA ELEMENTS

1316 — SELECT FIRST DATA ELEMENT

1318 — IDENTIFY CATEGORY OF SELECTED DATA ELEMENTS

1320 — IDENTIFY FIRST USER CONTEXT ELEMENT

1322 — PRESENTATION ELEMENT ASSOCIATED WITH DATA ELEMENT-USER CONTEXT COMBINATION?

NO

1324 — YES — RETRIEVE ASSOCIATED PRESENTATION ELEMENTS

1326 — GENERATE DATA OBJECT

1300

*FIG. 13*

1328 — MORE USER CONTEXT ELEMENTS? — YES — 1330 IDENTIFY NEXT USER CONTEXT ELEMENT

NO

1332 — MORE DATA ELEMENTS? — YES — SELECT NEXT DATA ELEMENT — 1334

NO

1336 — RANK RETRIEVED PRESENTATION ELEMENTS

1338 — SELECT SUBSET OF RETRIEVED PRESENTATION ELEMENTS BASED ON RANK

1340 — PRESENT DATA OBJECTS TO USER THROUGH APPLICATION INTERFACE

1342 — PRESENT SELECTED SUBSET OF PRESENTATION ELEMENTS THROUGH APPLICATION INTERFACE

Figure 14

# Figure 15

Figure 16

Advertiser

1436a — Business
1436b — Attributes
1436c — Query

Bidding

Ads Server (Zoom in)

weight

weight

1434 — Matching engine

Do the match considering using a formula: (B*w) + (A*w)...

Cyprus Run Time / Shell (Zoom in)

1430 — Context Package

Formula of all parameters which generates one URL: (CI*w) + (UI*w)...

weight

weight

weight

1428a — Company Info
1428b — User Info
1428c — Business Process
1428d — Process Step
1428e — Data

Figure 17

Ads Server 1414

Client 1412

Design time instance 1410

Figure 18

**European Patent Office**

## DECLARATION

which under Rule 45 of the European Patent Convention shall be considered, for the purposes of subsequent proceedings, as the European search report

Application Number

EP 06 02 6950

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason: | INV.<br>G06Q10/00 |

A meaningful search is not possible on the basis of all claims because all claims are directed to - Scheme, rules, method for doing business - Article 52 (2)(c) EPC and formulated to merely specify commonplace features relating to a technological implementation of such matter to such an extent that a meaningful search is not possible. The examiner could not determine any technical solution defined in response to a technical problem within the content/scope of the application as filed. Any problem herein addressed do not appear to require a technical, but rather oriented in the mere/plain implementation of a business process in any business field (supply chain management, customer relation management, human resources management, Financial management). Whilst the implementation of such a subject-matter may include the use of generic technical features like databases operations, presentation of information or data elements, client/server interactions, network, security and web tools through conventional data requests and queries, data filtering on business contextual data, these features plainly serve their well defined known functions of automating any business scheme as would be recognised by the skilful in the relevant technical field.

The applicant's attention is drawn to the fact that a search may be carried out during examination following a declaration of no search under Rule 45 EPC, should the problems which led to the declaration being issued be overcome (see EPC

-/--

| Place of search | Date | Examiner |
|---|---|---|
| The Hague | 20 March 2007 | Thiam, Mansour |

EPO FORM 1504 (P04C37)

**European Patent Office**

**DECLARATION**

which under Rule 45 of the European Patent Convention EP 06 02 6950 shall be considered, for the purposes of subsequent proceedings, as the European search report

Application Number

| The Search Division considers that the present application, does not comply with the provisions of the EPC to such an extent that it is not possible to carry out a meaningful search into the state of the art on the basis of all claims | **CLASSIFICATION OF THE APPLICATION (IPC)** |
|---|---|
| Reason:<br><br>    Guideline C-VI, 8.5).<br>-----| |

| Place of search | Date | Examiner |
|---|---|---|
| The Hague | 20 March 2007 | Thiam, Mansour |

EPO FORM 1504 (P04C37)